# EUROPÄISCHE PATENTSCHRIFT

(11) **EP 4 058 679 B1**
(45) Veröffentlichungstag und Bekanntmachung des Hinweises auf die Patenterteilung: **10.09.2025**
(21) Anmeldenummer: 20804261.4
(22) Anmeldetag: 10.11.2020
(51) Int. Cl.: F16B 12/20, F16B 12/26, A47B 96/20

(54) **ADAPTERELEMENT, VERBINDUNGSVORRICHTUNG, SET VON ADAPTERELEMENTEN UND VERFAHREN ZUM HERSTELLEN EINER VERBINDUNG**
ADAPTER ELEMENT, CONNECTING DEVICE, SET OF ADAPTER ELEMENTS AND METHOD FOR MAKING A CONNECTION
ÉLÉMENT ADAPTATEUR, DISPOSITIF D'ASSEMBLAGE, SET D'ÉLÉMENTS ADAPTEURS ET PROCÉDÉ POUR ÉTABLIR UNE CONNEXION

(30) Priorität: 12.11.2019 DE 102019217467
(43) Veröffentlichungstag der Anmeldung: 21.09.2022
(73) Patentinhaber: Lamello AG, 4416 Bubendorf (CH)
(72) Erfinder: BÜRK, Heinz, 79585 Steinen (DE)
(74) Vertreter: DTS Patent- und Rechtsanwälte PartmbB
(86) Internationale Anmeldenummer: PCT/EP2020/081610
(87) Internationale Veröffentlichungsnummer: WO 2021/094299

(56) Entgegenhaltungen:
- EP-A1- 2 684 490
- EP-A1- 3 564 541
- EP-B1- 2 142 042
- DE-A1- 102013 203 289
- US-A1- 2005 036 835

## Beschreibung

Die vorliegende Erfindung betrifft das Gebiet der Verbindungselemente, welche beispielsweise im Möbel- und Maschinenbau zum Einsatz kommen. Verbindungselemente dienen insbesondere dazu, verschiedene Bauteile miteinander zu verbinden, um beispielsweise einen Bauteilverbund herzustellen. Ferner können Verbindungselemente dazu dienen, ein Bauteil an einem Objekt zu befestigen.

Verschiedene Ausführungsformen von Verbindungsvorrichtungen und Verbindungselementen sind beispielsweise aus der DE 10 2014 101 158 A1, der DE 10 2013 203 289 A1 oder der EP 2 142 042 B1 zu entnehmen.

Weitere Beispiele aus dem Stand der Technik sind, z.B., in EP 3 564 541 A1 oder EP 2 684 490 A1 beschrieben.

US 2005/036835 A offenbart ein Adapterelement für ein Verbindungselement einer Verbindungsvorrichtung, wobei das Adapterelement Folgendes umfasst: 1
- einen Aufnahmeabschnitt zur Aufnahme des Verbindungselements der Verbindungsvorrichtung;
- einen Festlegungsabschnitt zur Festlegung des Adapterelements in einem Bauteil, wobei das Adapterelement in einen Aufnahmeabschnitt (recess) des Bauteils einbringbar ist,
wobei der Aufnahmeabschnitt des Adapterelements eine oder mehrere Aufnahmenuten zur Aufnahme eines oder mehrerer Haltevorsprünge des Verbindungselements umfasst, und wobei der Festlegungsabschnitt einen oder mehrere Haltevorsprünge zum Festlegen des Adapterelements in dem Bauteil umfasst.

Zur Festlegung von Verbindungselementen, insbesondere von solchen der in den vorstehend genannten Druckschriften offenbarten Arten, in einem Bauteil, kann insbesondere eine komplementär zu zumindest einem Teil des jeweiligen Verbindungselements ausgebildete Ausnehmung, insbesondere ein Aufnahmeabschnitt, in dem Bauteil erzeugt werden. Insbesondere bei massiven Holzplatten, MDF-Platten, etc. ist dies eine denkbare Methode. Für die Verwendung in Leichtbauplatten, beispielsweise in Sandwichelementen, ist eine solche Festlegung eines Verbindungselements jedoch nicht ohne weiteres möglich.

Der vorliegenden Erfindung liegt daher die Aufgabe zugrunde, ein Adapterelement für ein Verbindungselement einer Verbindungsvorrichtung bereitzustellen, mittels welchem das Verbindungselement stabil und zuverlässig in einem Bauteil, insbesondere einem Leichtbauteil, festlegbar ist.

Diese Aufgabe wird erfindungsgemäß durch ein Adapterelement gemäß Anspruch 1 gelöst.

Das Adapterelement dient insbesondere zur Aufnahme eines Verbindungselements einer Verbindungsvorrichtung. Erfindungsgemäß ist das Adapterelement in einem Bauteil festlegbar, insbesondere gemeinsam mit dem in oder an dem Adapterelement aufgenommenen Verbindungselement.

Das Adapterelement umfasst einen Aufnahmeabschnitt zur Aufnahme eines Verbindungselements einer Verbindungsvorrichtung. Der Aufnahmeabschnitt ist insbesondere durch einen Innenraum des Adapterelements gebildet. Insbesondere ist zumindest ein Teil des Verbindungselements innerhalb des Adapterelements angeordnet, wenn das Verbindungselement in dem Aufnahmeabschnitt aufgenommen ist.

Erfindungsgemäß umfasst das Adapterelement einen Festlegungsabschnitt zur Festlegung des Adapterelements in einem Bauteil.

Der Festlegungsabschnitt ist insbesondere an einer oder mehreren Außenseiten des Adapterelements angeordnet.

Vorzugsweise ist der Festlegungsabschnitt an dem Aufnahmeabschnitt abgewandten Außenseiten, insbesondere Außenwänden und/oder Seitenwänden, des Adapterelements angeordnet und/oder ausgebildet.

Mittels des Adapterelements ist das Verbindungselement vorzugsweise nicht unmittelbar, sondern mittelbar an und/oder in dem Bauteil festlegbar. Günstig kann es sein, wenn das Adapterelement vollständig in dem Bauteil versenkt festlegbar ist.

Alternativ oder ergänzend hierzu kann vorgesehen sein, dass das Verbindungselement, insbesondere ein Grundkörper des Verbindungselements, vollständig innerhalb des Bauteils festlegbar ist.

Der Grundkörper des Verbindungselements ist vorzugsweise derjenige Teil des Verbindungselementes, welcher der Festlegung des Verbindungselements in einem Bauteil und/oder in einem Adapterelement dient.

Insbesondere ist der Grundkörper des Verbindungselements derjenige Teil des Verbindungselements, welcher nicht für die Herstellung der Verbindung mit einem weiteren Verbindungselement, insbesondere einem Gegenstück, dient.

Erfindungsgemäß ist vorgesehen, dass der Aufnahmeabschnitt eine oder mehrere Aufnahmenuten, zur Aufnahme eines oder mehrerer Haltevorsprünge eines Verbindungselements umfasst.

Erfindungsgemäß ist vorgesehen, dass dass der Festlegungsabschnitt einen oder mehrere Haltevorsprünge zum Festlegen des Adapterelements in dem Bauteil umfasst.

Erfindungsgemäß ist das Adapterelement in einen Aufnahmeabschnitt eines Bauteils einbringbar. Der Aufnahmeabschnitt des Bauteils ist hierzu insbesondere im Wesentlichen komplementär zu einer äußeren Form des Adapterelements ausgebildet. Insbesondere weist der Aufnahmeabschnitt des Bauteils vorzugsweise eine oder mehrere Aufnahmevertiefungen, insbesondere Aufnahmenuten, auf, in welche ein oder mehrere Haltevorsprünge des Adapterelements, welche insbesondere nicht-selbstschneidend ausgebildet sind, einbringbar, insbesondere einschiebbar, sind.

Alternativ oder ergänzend zur Festlegung des Adapterelements an dem Bauteil mittels eines oder mehrerer, insbesondere nicht-selbstschneidender, Haltevorsprünge können beispielsweise folgende Festlegungsvarianten vorgesehen sein:
Es kann vorgesehen sein, dass das Adapterelement formschlüssig und/oder stoffschlüssig und/oder reibschlüssig an dem Bauteil festlegbar oder festgelegt ist.

Beispielsweise kann eine formschlüssige Verankerung mittels Hinterschneidung vorgesehen sein. Hierbei können insbesondere einzelne oder mehrere, insbesondere überlagerte, Bewegungen zum Festlegen des Adapterelements in dem Bauteil vorgesehen sein. Beispielsweise kann ein einfaches Einschieben oder Einstecken vorgesehen sein.

Alternativ oder ergänzend hierzu können Bewegungskombinationen, wie beispielsweise ein Einstecken und ein zusätzliches Schieben, ein Einstecken und ein zusätzliches Drehen, ein Einstecken und ein zusätzliches Einclipsen, vorgesehen sein.

Ferner kann vorgesehen sein, dass das Adapterelement beispielsweise mittels einer Klebeverbindung an und/oder in dem Bauteil festlegbar ist. Der Festlegungsabschnitt des Adapterelements kann hierfür insbesondere mit einer rauen und/oder strukturierten und/oder mit Vorsprüngen und/oder Hinterschnitten versehenen Oberfläche versehen sein.

Günstig kann es sein, wenn das Adapterelement, insbesondere der Festlegungsabschnitt, einen oder mehrere Kanäle umfasst, durch welche ein Verbindungswerkstoff, insbesondere ein Klebstoff, zu einer oder mehreren Verbindungsflächen, insbesondere Klebeflächen, des Festlegungsabschnitts zuführbar ist. Beispielsweise kann an einer Oberseite des Adapterelements eine Öffnung zur Zuführung des Verbindungsstoffs, insbesondere des Klebstoffs, vorgesehen sein, wobei mittels des einen oder der mehreren Kanäle der zugeführte Verbindungsstoff, insbesondere Klebstoff, zu der einen oder den mehreren Verbindungsflächen des Festlegungsabschnitts zuführbar ist.

Ferner kann vorgesehen sein, dass das Adapterelement eine oder mehrere Aufnahmen für einen Verbindungsstoff, beispielsweise Klebstoffaufnahmen, insbesondere Leimperlen, aufweist. Diese Aufnahmen sind vorzugsweise in einem zur Montage des Adapterelements bereiten Zustand mit dem Verbindungsstoff gefüllt und/oder versehen.

Insbesondere durch Einbringen des Adapterelements in das Bauteil und/oder durch einen nachfolgenden Aktivierungsschritt kann der Verbindungsstoff vorzugsweise aktiviert werden, wobei er hierdurch insbesondere austritt und/oder sich verteilt, so dass der Verbindungsstoff eine insbesondere stoffschlüssige Verbindung und/oder formschlüssige Verbindung zwischen dem Festlegungsabschnitt des Adapterelements und dem Bauteil erzeugt.

Insbesondere kann die Aktivierung des Verbindungsstoffs ein Aufreißen, Aufplatzen, Aufbrechen oder sonstiges physikalisches Aktivieren sein, insbesondere durch Einbringen des Adapterelements in das Bauteil. Alternativ oder ergänzend hierzu kann eine chemische Aktivierung des Verbindungsstoffs vorgesehen sein.

Vorteilhaft kann es sein, wenn der Verbindungsstoff ein Klebstoff ist. Es kann jedoch alternativ oder ergänzend auch vorgesehen sein, dass der Verbindungsstoff ein Polyurethanmaterial ist, beispielsweise ein schaumbildendes, aushärtendes Polyurethanmaterial.

Bei einer weiteren Ausführungsform des Adapterelements kann alternativ oder ergänzend hierzu vorgesehen sein, dass dieses mittels eines Schweißverfahrens, beispielsweise durch Ultraschallschweißen, mittels Woodwelding und/oder durch ein Kaltschmelzverfahren mit dem Bauteil verbunden und/oder an und/oder in demselben festgelegt wird.

Alternativ oder ergänzend kann zudem eine Befestigung des Adapterelements an und/oder in dem Bauteil mittels einer oder mehrerer Schrauben und/oder Dübel und/oder Nietverbindungen, etc. vorgesehen sein.

Bei den nachfolgend erläuterten Ausführungsformen von Adapterelementen ist insbesondere die Verwendung eines oder mehrerer Haltevorsprünge zur Festlegung des Adapterelements in einem Bauteil vorgesehen. Sämtliche vorstehend genannten Optionen für die Festlegung des Adapterelements an und/oder in einem Bauteil können bei sämtlichen Ausführungsformen alternativ oder ergänzend zu dem einen oder den mehreren Haltevorsprüngen vorgesehen sein.

Beispielsweise kann eine Kombination von stoffschlüssiger Verbindung unter Verwendung eines Verbindungsstoffs, insbesondere eines Klebstoffs, auch bei einer Ausgestaltung eines Festlegungsabschnitts vorgesehen sein, bei welcher dieser einen oder mehrere Haltevorsprünge aufweist.

Erfindungsgemäß ist vorgesehen, dass die eine oder die mehreren Aufnahmenuten, zur Aufnahme eines oder mehrerer Haltevorsprünge eines Verbindungselements gekrümmt, insbesondere kreisbogenabschnittsförmig gekrümmt, ausgebildet sind.

Der Aufnahmeabschnitt des Adapterelements umfasst vorzugsweise zwei, vier, sechs oder mehr als sechs Aufnahmenuten, welche vorzugsweise bezüglich einer Längsmittelebene des Adapterelements zumindest näherungsweise symmetrisch zueinander angeordnet und/oder ausgebildet sind.

Vorzugsweise sind jeweils zwei Aufnahmevertiefungen, insbesondere Aufnahmenuten, paarweise vorgesehen und in einander gegenüberliegenden Wandungen, insbesondere Innenwänden, des Aufnahmeabschnitts angeordnet.

Eine oder mehrere Aufnahmenuten, zur Aufnahme eines oder mehrerer Haltevorsprünge eines Verbindungselements erstrecken sich nur einseitig oder beidseitig bis zu einer Oberseite des Adapterelements. Auf diese Weise

ist eine Einbringung eines Verbindungselements in das Adapterelement und/oder eine Entnahme desselben aus dem Adapterelement möglich, wenn das Adapterelement bereits in dem Bauteil montiert ist.

Erfindungsgemäß ist vorgesehen, dass der eine oder die mehreren Haltevorsprünge des Verbindungselements und/oder der eine oder die mehreren Haltevorsprünge des Adapterelements gekrümmt, insbesondere kreisbogenabschnittsförmig gekrümmt, ausgebildet sind.

Vorzugsweise erstrecken sich der eine oder die mehreren Haltevorsprünge des Verbindungselements und/oder des Adapterelements längs eines Kreisbogenabschnitts einseitig oder beidseitig zumindest näherungsweise bis zur Oberseite des Verbindungselements, insbesondere eines Grundkörpers des Verbindungselements, und/oder zur Oberseite des Adapterelements. Ferner kann einseitig oder beidseitig ein von der Oberseite zurückversetztes Ende des jeweiligen Haltevorsprungs vorgesehen sein.

Günstig kann es sein, wenn das Adapterelement mehrere Aufnahmenuten, zur Aufnahme von Verbindungselementen unterschiedlicher Art, beispielsweise unterschiedlicher Größe, etc., umfasst.

Die Aufnahmenuten für die unterschiedlichen Arten von Verbindungselementen sind insbesondere in unterschiedlichen Tiefen in dem Aufnahmeabschnitt des Adapterelements angeordnet.

Die Aufnahmenuten, weisen dabei vorzugsweise identische oder voneinander verschiedene Krümmungsradien auf. Insbesondere kann vorgesehen sein, dass die Aufnahmenuten für die unterschiedlichen Arten von Verbindungselementen parallel versetzt zueinander angeordnet sind, insbesondere längs der Tiefenrichtung und/oder Verbindungsrichtung.

Günstig kann es sein, wenn die eine oder die mehreren, insbesondere sämtliche, Aufnahmenuten des Adapterelements und/oder einer oder mehrere, insbesondere sämtliche, Haltevorsprünge des Adapterelements längs einer oder mehrerer Ebenen verlaufen, welche insbesondere parallel zueinander und/oder senkrecht zu einer Oberseite des Adapterelements ausgerichtet sind.

Die Oberseite des Adapterelements ist insbesondere eine im montierten Zustand des Adapterelements aus dem Bauteil nach außen gerichtete Seite. Insbesondere ist die Oberseite des Adapterelements diejenige Seite des Adapterelements, welche im montierten Zustand des Adapterelements im Wesentlichen bündig mit einer Seite des Bauteils ist, in welcher das Adapterelement angeordnet ist.

Vorzugsweise ist die Oberseite des Adapterelements diejenige Seite desselben, in welchem ein oder mehrere Halteelemente und/oder Federelemente eines in dem Adapterelement angeordneten Verbindungselements aus dem Adapterelement herausragen, um mit einem geeigneten Gegenstück eines weiteren Verbindungselements der Verbindungsvorrichtung in Eingriff gebracht zu werden oder zu sein.

Alternativ oder ergänzend hierzu ist die Oberseite des Adapterelements vorzugsweise diejenige Seite des Adapterelements, durch welche ein oder mehrere Halteelemente und/oder Federelemente, etc. des in dem Adapterelement angeordneten Verbindungselements hindurch für ein weiteres Verbindungselement zugänglich sind, insbesondere zur Herstellung einer Verbindung mit dem weiteren Verbindungselement der Verbindungsvorrichtung.

Vorteilhaft kann es sein, wenn das Adapterelement ein oder mehrere Arretierelemente, insbesondere Rastelemente, zum Festlegen eines Verbindungselements in dem Aufnahmeabschnitt umfasst.

Beispielsweise können zwei, vier oder sechs Arretierelemente vorgesehen sein.

Es kann vorgesehen sein, dass ein oder mehrere Haltevorsprünge des Verbindungselements zwischen ein oder mehrere Abstützvorsprünge des Adapterelements und ein oder mehrere Arretierelemente des Adapterelements einklemmbar, insbesondere einrastbar, sind, insbesondere zum Festlegen des Verbindungselements an dem Adapterelement und/oder in dem Adapterelement.

Das Adapterelement umfasst vorzugsweise einen Grundkörper, welcher eine im Wesentlichen längs einer Ebene verlaufende Oberseite und eine insbesondere gekrümmte Grundfläche aufweist. Die Grundfläche ist insbesondere derart gekrümmt, dass sich diese von der Oberseite zunächst wegerstreckt und aufgrund der Krümmung erneut bis zur Oberseite hin erstreckt.

Zwei Seitenflächen, welche insbesondere im Wesentlichen senkrecht zur Oberseite ausgerichtet sind, verbinden vorzugsweise die Grundfläche und die Oberseite zusätzlich.

Die Seitenflächen sind insbesondere parallel zueinander ausgerichtet.

In einer senkrecht zur Oberseite und/oder längs einer Längsrichtung des Adapterelements verlaufenden Ebene weist der Grundkörper des Adapterelements vorzugsweise einen im Wesentlichen kreissegmentförmigen Querschnitt auf.

Der Grundkörper ist vorzugsweise mit einem oder mehreren, insbesondere zwei, Haltevorsprüngen versehen, welche insbesondere an den der Grundfläche zugewandten Seiten der Seitenflächen angeordnet sind und sich zumindest näherungsweise senkrecht von den Seitenflächen wegerstrecken. Die Haltevorsprünge sind insbesondere kreisbogenabschnittsförmig gekrümmt ausgebildet.

Günstig kann es sein, wenn die Grundfläche und/oder die Oberseite und/oder eine oder beide Seitenflächen des Grundkörpers jeweils eine oder mehrere Vertiefungen aufweisen. Diese können insbesondere zur Aufnahme von Verbindungsstoff, beispielsweise Klebstoff, dienen. Der Verbindungsstoff kann dabei insbesondere ein Verbindungsstoff zum Verbinden des Adapterelements mit einem Bauteil sein. In diesem Fall dient die Aufnahme des Verbindungsstoffs mittels der einen oder der mehreren Vertiefungen insbesondere der optimierten formschlüssigen und/oder stoffschlüssigen Verbindung zwischen dem Bauteil und dem Adapterelement.

Alternativ oder ergänzend können eine oder mehrere Vertiefungen in der Oberseite, der Grundfläche und/oder einer oder mehreren Seitenflächen vorgesehen sein, um beim Verbinden, insbesondere Verkleben, von miteinander zu verbindenden Bauteilen überschüssigen Verbindungsstoff, insbesondere Klebstoff, aufnehmen zu können.

Vorzugsweise weist die Grundfläche eine Öffnung auf, durch welche ein Verbindungselement in das Adapterelement einbringbar ist.

Alternativ oder ergänzend hierzu kann vorgesehen sein, dass die Oberseite eine Öffnung aufweist, durch welche ein Verbindungselement in das Adapterelement einbringbar ist.

Es kann vorgesehen sein, dass das Adapterelement, insbesondere eine Öffnung in einer Oberseite und/oder in einer Grundfläche des Adapterelements, so ausgebildet ist, dass ein Verbindungselement sowohl durch die Grundfläche als auch durch die Oberseite hindurch in das Adapterelement einbringbar ist. Alternativ hierzu kann vorgesehen sein, dass das Verbindungselement lediglich durch eine Öffnung in der Grundfläche oder aber lediglich durch eine Öffnung in der Oberseite des Adapterelements in das Adapterelement einbringbar ist.

Bei einer weiteren Ausgestaltung des Adapterelements, auf welche nachfolgend noch näher eingegangen wird, kann ferner vorgesehen sein, dass keine der Öffnungen in der Oberseite und/oder der Grundfläche zum Einbringen eines Verbindungselements in das Adapterelement geeignet ist, sondern dass vielmehr beim Zusammenbau des Adapterelements das Verbindungselement zwischen zwei oder mehr Teile des Adapterelements eingebracht wird.

Eine Längsrichtung des Adapterelements erstreckt sich vorzugsweise parallel zu den Seitenflächen sowie parallel zur Oberseite des Adapterelements.

Eine Tiefenrichtung des Adapterelements erstreckt sich vorzugsweise senkrecht zur Oberseite des Adapterelements.

Insbesondere ist eine Tiefenrichtung eine Verbindungsrichtung, längs welcher in einem Verbindungszustand der Verbindungsvorrichtung beispielsweise die die Bauteile miteinander verbindenden Zugkräfte wirken.

Eine Dickenrichtung des Adapterelements erstreckt sich senkrecht zu den Seitenflächen des Adapterelements und/oder parallel zur Oberseite des Adapterelements.

Vorteilhaft kann es sein, wenn das Adapterelement einen einstückigen Grundkörper umfasst, welcher beispielsweise als ein Spritzguss-Kunststoffbauteil ausgebildet ist.

Ein einstückiger Grundkörper ist insbesondere in einem einzigen Verfahrensschritt und/oder einteilig hergestellt oder herstellbar.

Insbesondere umfasst und/oder bildet der vorzugsweise einstückige Grundkörper den Aufnahmeabschnitt und/oder den Festlegungsabschnitt und/oder die Oberseite und/oder die Grundfläche und/oder die Seitenflächen und/oder einen oder mehrere Haltevorsprünge und/oder eine oder mehrere Aufnahmevertiefungen, insbesondere Aufnahmenuten.

Alternativ zu einem einstückigen Grundkörper kann vorgesehen sein, dass das Adapterelement einen Grundkörper umfasst, welcher mehrere miteinander verbindbare und/oder verbundene Teile, insbesondere mehrere lösbar miteinander verbindbare und/oder verbundene Teile, umfasst, wobei eines oder mehrere, insbesondere sämtliche, der Teile vorzugsweise als Spritzguss-Kunststoffbauteile ausgebildet sind.

Jedes dieser Teile ist vorzugsweise einstückig ausgebildet.

Es kann vorgesehen sein, dass der Grundkörper aus zwei miteinander baugleichen und/oder hinsichtlich der Formgebung identischen Teilen hergestellt oder herstellbar ist.

Insbesondere kann vorgesehen sein, dass der Grundkörper aus zwei identischen Teilen herstellbar oder hergestellt ist.

Die Teile zur Herstellung des Grundkörpers sind beispielsweise ineinandersteckbar und/oder miteinander verrastbar.

Insbesondere sind die Teile zur Herstellung des Grundkörpers lösbar miteinander verbindbar.

Günstig kann es sein, wenn die Teile zur Herstellung des Grundkörpers mittels einer Nut-Feder-Verbindung miteinander verbindbar sind.

Die Teile zur Herstellung des Grundkörpers grenzen im montierten Zustand des Grundkörpers insbesondere längs einer Längsmittelebene des Adapterelements, welche insbesondere senkrecht zur Dickenrichtung des Adapterelements mittig angeordnet ist, aneinander an.

Die Längsmittelebene des Adapterelements ist insbesondere parallel zu Seitenflächen des Adapterelements und/oder senkrecht zu einer Oberseite des Adapterelements ausgerichtet.

Insbesondere grenzen die Teile zur Herstellung des Grundkörpers im Aufnahmeabschnitt des Adapterelements aneinander an.

Ein oder mehrere Verbindungselemente sind vorzugsweise zwischen die zwei oder mehr Teile zur Herstellung des Grundkörpers einbringbar, um das eine oder die mehreren Verbindungselemente an und/oder in dem Adapterelement, insbesondere an und/oder in dem Grundkörper des Adapterelements, festzulegen, beispielsweise formschlüssig festzulegen.

Günstig kann es sein, wenn aus mehreren unterschiedlich dicken Teilen, das heißt Teilen, welche sich längs der Dickenrichtung unterschiedlich weit erstrecken, Adapterelemente mit insgesamt unterschiedlicher Erstreckung in der Dickenrichtung herstellbar sind.

Beispielsweise kann durch ein Set von unterschiedlich dicken Teilen zur Herstellung des Grundkörpers durch geeignete Kombination dieser Teile eine große Anzahl von Adapterelementen, welche sich hinsichtlich ihrer Erstreckung in der Dickenrichtung voneinander unterscheiden, hergestellt werden.

Das eine oder die mehreren Verbindungselemente sind insbesondere in sämtlichen Raumrichtungen formschlüssig zwischen den Teilen zur Herstellung des Grundkörpers aufgenommen oder aufnehmbar.

Günstig kann es sein, wenn das Adapterelement in mindestens einer Seitenfläche desselben eine oder mehrere Durchtrittsöffnungen aufweist, durch welche der Aufnahmeabschnitt und/oder ein in dem Aufnahmeabschnitt aufgenommenes Verbindungselement zugänglich ist.

Insbesondere kann vorgesehen sein, dass in beiden Seitenflächen jeweils eine oder mehrere Durchtrittsöffnungen vorgesehen sind, so dass unabhängig von einer Orientierung des Adapterelements bei der Montage desselben und/oder bei der Montage des Verbindungselements die Zugänglichkeit gewährleistet ist.

Insbesondere ist durch die eine oder die mehreren Durchtrittsöffnungen ein Werkzeug einbringbar, beispielsweise um ein bewegliches Halteelement des Verbindungselements, wie es in dem Adapterelement angeordnet sein kann, zu betätigen, beispielsweise von einer Offenstellung in eine Schließstellung oder umgekehrt zu bringen.

Günstig kann es sein, wenn das Adapterelement mehrteilig ausgebildet ist.

Der Aufnahmeabschnitt kann hierbei beispielsweise durch ein oder mehrere Teile des Adapterelements gebildet sein.

Insbesondere ist der Aufnahmeabschnitt vollständig durch nur ein einstückiges Teil von mehreren Teilen des Adapterelements gebildet.

Das Adapterelement umfasst insbesondere einen vorzugsweise einstückigen Grundkörper, welcher einen Teil des Aufnahmeabschnitts oder den vollständigen Aufnahmeabschnitt bildet oder umfasst.

Ein oder mehrere optionale weitere Teile des Adapterelements, welche insbesondere optional zusätzlich zu dem Grundkörper vorgesehen sind, sind vorzugsweise ein oder mehrere Seitenteile, welche insbesondere in der Dickenrichtung an den Grundkörper angrenzend an demselben anordenbar oder angeordnet sind.

Auf ein Seitenteil wird hierin im Singular und im Plural Bezug genommen. Grundsätzlich können bei sämtlichen Varianten des Adapterelements nur ein einzelnes oder auch zwei Seitenteile vorgesehen sein. Darüber hinaus ist es denkbar, dass an den Seitenteilen selbst weitere Seitenteile anordenbar sind, um noch weitere Erstreckungen des Adapterelements längs der Dickenrichtung zu ermöglichen.

Der Grundkörper umfasst vorzugsweise einen oder mehrere Haltevorsprünge zur Festlegung desselben in einem Bauteil.

Die Seitenteile weisen vorzugsweise jeweils ein oder mehrere Haltevorsprünge auf.

Vorzugsweise ist der Grundkörper für sich genommen und/oder in Kombination mit einem Seitenteil und/oder in Kombination mit zwei oder mehr Seitenteilen in einem Bauteil festlegbar, beispielsweise mittels Haltevorsprüngen.

Vorzugsweise umfasst das Adapterelement einen oder mehrere Verbindungsbereiche.

Beispielsweise sind an jeder den Grundkörper in Dickenrichtung begrenzenden Außenwand (oder auch nur an einer dieser Außenwände) jeweils ein oder mehrere Verbindungsbereiche angeordnet und/oder gebildet, welche mit einem oder mehreren zumindest abschnittsweise komplementär hierzu ausgebildeten Verbindungsbereichen eines Seitenteils in Eingriff bringbar sind.

Beispielsweise umfasst jedes Seitenteil jeweils ein oder mehrere Distanzierelemente, welche in eine oder mehrere, zumindest abschnittsweise komplementär zu einem Distanzierelement ausgebildete Distanzierelementaufnahmen des Grundkörpers einbringbar sind.

Mittels der Distanzierelemente und/oder der Distanzierelementaufnahmen sind insbesondere eine oder mehrere Rasterstrukturen gebildet, wobei die Seitenteile hierdurch vorzugsweise in unterschiedlichen Positionen und/oder Abständen von dem Grundkörper relativ zu demselben festlegbar sind.

Insbesondere kann vorgesehen sein, dass ein oder mehrere Haltevorsprünge des jeweiligen Seitenteils mittels der Rasterstruktur in unterschiedlichen Abständen von dem Grundkörper festlegbar sind.

Günstig kann es sein, wenn eine oder mehrere Distanzierelementaufnahmen und/oder ein oder mehrere Distanzierelemente jeweils einen oder mehrere Distanziervorsprünge und/oder eine oder mehrere Distanzierausnehmungen aufweisen.

Die Distanziervorsprünge und/oder Distanzierausnehmungen dienen insbesondere der Ausbildung einer Rasterstruktur.

Vorzugsweise sind die Distanziervorsprünge zumindest abschnittsweise komplementär zu den Distanzierausnehmungen ausgebildet und/oder angeordnet.

Vorteilhaft kann es sein, wenn das mindestens eine Distanzierelement und/oder die mindestens eine Distanzierelementaufnahme jeweils einen oder mehrere Distanziervorsprünge und/oder eine oder mehrere Distanzierausnehmungen umfasst.

Es kann vorgesehen sein, dass das Distanzierelement beispielsweise im Wesentlichen U-förmig ausgebildet ist und in eine hierzu komplementäre Distanzierelementaufnahme in dem Grundkörper einbringbar ist.

Vorzugsweise kann ein Adapterelement, insbesondere unabhängig von der übrigen Ausgestaltung desselben, mit einer oder mehreren Positioniernuten versehen sein.

Eine solche Positioniernut ist insbesondere mit einem Positioniervorsprung eines Verbindungselements in Eingriff bringbar, um das Verbindungselement in einer gewünschten Vorzugsposition in dem Aufnahmeabschnitt des Adapterelements festlegen zu können.

Sowohl der Grundkörper als auch die Seitenteile sind insbesondere einstückig herstellbar und/oder ausgebildet. Beispielsweise kann die Herstellung des Grundkörpers und/oder eines oder mehrerer Seitenteile in einem Spritzgussverfahren, insbesondere einem Kunststoff-Spritzgussverfahren, vorgesehen sein.

Alternativ oder ergänzend zu den vorstehenden Ausführungen kann vorgesehen sein, dass die Distanzierelemente federnd in den Distanzierelementaufnahmen festgelegt oder festlegbar sind.

Eine oder mehrere Distanzierfedern sind dabei insbesondere als Druckfedern zwischen dem Grundkörper und einem Seitenteil angeordnet, beispielsweise derart, dass die Distanzierfedern insbesondere das Seitenteil in einer Dickenrichtung von dem Grundkörper nach außen wegdrücken. Mittels einer solchen Ausgestaltung eines Adapterelements können insbesondere Verbindungselemente in Bauteilen mit variierenden Dicken der Aufnahmeabschnitte festgelegt werden, ohne dass bei dem Adapterelement stets im Voraus eine exakte Erstreckung in der Dickenrichtung eingestellt werden muss.

Dadurch, dass die Distanzierfeder vorzugsweise in der Dickenrichtung und somit senkrecht zu einer Auszugsrichtung (Tiefenrichtung) wirkt, muss die mindestens eine Distanzierfeder im montierten Zustand des Adapterelements samt eines darin aufgenommenen Verbindungselements zur Verbindung von Bauteilen miteinander vorzugsweise keine Haltekräfte zum Halten der Bauteile aufbringen. Vielmehr muss die mindestens eine Distanzierfeder vorzugsweise lediglich für eine zuverlässige Verankerung der Haltevorsprünge in den Abstützvorsprüngen des jeweiligen Bauteils sorgen.

Um ein unerwünschtes Trennen des Seitenteils von dem Grundkörper zu vermeiden, sind ein oder mehrere Distanzierelemente im Querschnitt beispielsweise T-förmig und/oder hintergreifen die jeweilige Distanzierelementaufnahme vorzugsweise in Dickenrichtung.

Eine Unterseite des Adapterelements kann beispielsweise mit einem oder mehreren Fließkanälen versehen sein, welche beim Fixieren der Bauteile und/oder beim Fixieren eines Adapterelements in einem Bauteil beispielsweise zur formschlüssigen Verbindung beitragen und/oder überschüssigen Verbindungsstoff aufnehmen können.

Günstig kann es sein, wenn das Adapterelement und/oder ein darin anzuordnendes Verbindungselement eine oder mehrere Einbringöffnungen aufweist, welche sich insbesondere in der Tiefenrichtung durch das Adapterelement und/oder das Verbindungselement hindurch erstrecken und/oder welche von einer Außenseite und/oder Oberseite des Adapterelements eine Einbringung von Verbindungsstoff, insbesondere Klebstoff, in einen Bereich an der Unterseite des Adapterelements ermöglichen.

Das Adapterelement kann insbesondere ein oder mehrere Rückhalteelemente aufweisen.

Ein Rückhalteelement kann beispielsweise ein Rückhaltevorsprung sein.

Vorzugsweise dient ein Rückhalteelement der Verankerung des Adapterelements an einem als Leichtbauplatte ausgebildeten Bauteil.

Beispielsweise kann vorgesehen sein, dass ein Rückhalteelement eine Deckschicht eines Bauteils untergreift und/oder sich in einen Kern eines Bauteils hineinerstreckt.

Das Rückhalteelement ist vorzugsweise als linearer oder zumindest näherungsweise linearer Vorsprung ausgebildet, insbesondere um eine ebene Anlage desselben an und/oder unterhalb einer eben ausgebildeten Deckschicht eines Bauteils zu ermöglichen.

Günstig kann es sein, wenn das Adapterelement zwei Seitenwände und eine die beiden Seitenwände miteinander verbindende Bodenwand aufweist.

Die zwei Seitenwände und die Bodenwand umgeben vorzugsweise den Aufnahmeabschnitt zur Aufnahme des Verbindungselements.

Günstig kann es sein, wenn eine oder beide Seitenwände jeweils lediglich in zwei einander gegenüberliegenden Endbereichen, insbesondere bezüglich einer Längsrichtung des Adapterelements einander gegenüberliegenden Endbereichen, mit der Bodenwand verbunden sind. Ein zwischen den beiden Endbereichen angeordneter Mittelbereich der jeweiligen Seitenwand ist hierdurch insbesondere relativ zu der Bodenwand vorzugsweise elastisch nachgiebig und/oder beweglich ausgebildet.

Günstig kann es sein, wenn ein oder mehrere Rückhalteelemente in dem Mittelbereich angeordnet sind. Insbesondere erstrecken sich ein oder mehrere Rückhalteelemente vorzugsweise von einer dem Aufnahmeabschnitt abgewandten Seitenfläche einer jeweiligen Seitenwand nach außen.

Günstig kann es sein, wenn ein oder mehrere Rückhalteelemente jeweils einen oder mehrere Flankenbereiche aufweisen, welche insbesondere zu einem oder mehreren Endbereichen einer Seitenwand des Grundkörpers hin abgeflachte Abschnitte des jeweiligen Rückhalteelements bilden. Hierdurch kann vorzugsweise ein Einschieben des Adapterelements in ein Bauteil erleichtert werden, insbesondere um eine Beschädigung einer Deckschicht des Bauteils zu verhindern oder zumindest zu minimieren.

Ein oder mehrere Rückhalteelemente sind insbesondere federnd und/oder durch Einschieben eines Verbindungselements in den Aufnahmeabschnitt in dem Bauteil verankerbar, insbesondere in einen Kern des Bauteils einbringbar und/oder unterhalb einer Deckschicht des Bauteils festlegbar, beispielsweise festklemmbar.

Das Adapterelement eignet sich insbesondere zur Verwendung in einer Verbindungsvorrichtung, welche insbesondere zur Verbindung von Möbel- und/oder Maschinenteilen und/oder zum Festlegen eines Bauteils an einem Objekt geeignet ist.

Die Verbindungsvorrichtung umfasst vorzugsweise mindestens ein Verbindungselement und mindestens ein erfindungsgemäßes Adapterelement.

Auf die diesbezügliche Beschreibung wird daher explizit Bezug genommen und deren Inhalt wird hiermit durch Inbezugnahme vollumfänglich zum Gegenstand der vorliegenden Anmeldung gemacht.

Vorteilhaft kann es sein, wenn der Aufnahmeabschnitt des mindestens einen Adapterelements zumindest abschnittsweise komplementär zu einem Grundkörper des mindestens einen Verbindungselements ausgebildet ist.

Der Grundkörper des mindestens einen Verbindungselements ist dabei insbesondere der innerhalb des Adapterelements anzuordnende Teil des Verbindungselements.

Insbesondere kann vorgesehen sein, dass der durch den Aufnahmeabschnitt geschaffene Hohlraum in dem Adapterelement zumindest näherungsweise komplementär zu einer Außenkontur des Verbindungselements, insbesondere einer Außenkontur des Grundkörpers des Verbindungselements, ausgebildet ist.

Vorzugsweise ist das mindestens eine Verbindungselement in einer, zwei oder allen drei Raumrichtungen formschlüssig in dem Adapterelement festlegbar oder festgelegt.

Ein Grundkörper des mindestens einen Verbindungselements ist vorzugsweise zumindest näherungsweise vollständig in dem Aufnahmeabschnitt des mindestens einen Adapterelements aufnehmbar oder aufgenommen.

Insbesondere ist der Grundkörper des mindestens einen Verbindungselements vorzugsweise vollständig versenkt in dem Aufnahmeabschnitt des mindestens einen Adapterelements aufnehmbar oder aufgenommen.

Mittels des erfindungsgemäßen Adapterelements ist es vorzugsweise möglich, ein Verbindungselement auch in Bereichen einzusetzen, in welchen dieses bislang nicht zufriedenstellend an einem Bauteil festgelegt werden konnte.

Beispielsweise ermöglicht die Verwendung eines Adapterelements den Einsatz von Verbindungselementen in Leichtbauteilen unterschiedlicher Dicke.

Hierzu sind insbesondere an die jeweilige Dicke des Leichtbauteils angepasste Adapterelemente, insbesondere mit unterschiedlichen Erstreckungen längs der Dickenrichtung, vorgesehen.

Die Adapterelemente erstrecken sich insbesondere soweit längs der Dickenrichtung, dass eine Festlegung des jeweiligen Adapterelements in den Deckschichten eines beispielsweise als Sandwichelement ausgebildeten Leichtbauteils möglich ist. Der bei Leichtbauteilen oftmals unzureichend stabile Kern ist dann für eine stabile Fixierung des Verbindungselements unerheblich, da das Verbindungselement mittels des Adapterelements stabil und zuverlässig an den Deckschichten festlegbar ist.

Die vorliegende Erfindung betrifft auch ein Set von Adapterelementen zur Aufnahme von Verbindungselementen einer oder mehrerer Verbindungsvorrichtungen, wobei das Set mehrere Arten von erfindungsgemäßen Adapterelementen umfasst.

Die mehreren Arten von Adapterelementen unterscheiden sich vorzugsweise
a) hinsichtlich ihrer Dimensionierung, insbesondere hinsichtlich ihrer Erstreckung in einer Dickenrichtung und/oder einer Tiefenrichtung und/oder einer Längsrichtung; und/oder
b) hinsichtlich der Ausgestaltung des jeweiligen Aufnahmeabschnitts, insbesondere hinsichtlich der Anzahl und/oder der Form und/oder der Länge und/oder des Krümmungsradius der jeweiligen mindestens einen Aufnahmenut; und/oder
c) hinsichtlich der Ausgestaltung des jeweiligen Festlegungsabschnitts, insbesondere hinsichtlich der Formgebung und/oder der Festlegungsmethode.

Günstig kann es sein, wenn mehrere Arten von Adapterelementen, insbesondere sämtliche Arten von Adapterelementen eines Sets von Adapterelementen, zumindest derart identisch geformte Aufnahmeabschnitte aufweisen, dass eine oder mehrere Arten von Verbindungselementen in jeder einzelnen der mehreren Arten von Adapterelementen aufnehmbar sind.

Das Adapterelement umfasst insbesondere zwei Außenwände, welche insbesondere die Seitenflächen des Adapterelements bilden.

Alternativ oder ergänzend hierzu kann vorgesehen sein, dass das Adapterelement zwei Innenwände umfasst, welche insbesondere den Aufnahmeabschnitt begrenzen.

Vorzugsweise sind zwischen den Außenwänden und den Innenwänden Verbindungsstreben, Verbindungswände, Versteifungselemente und/oder Rippen angeordnet und/oder ausgebildet, welche die Außenwände mit den Innenwänden verbinden und dieselben auf Abstand voneinander halten.

Für unterschiedlich dimensionierte Adapterelemente, insbesondere für Adapterelemente, welche unterschiedliche Ausdehnungen in der Dickenrichtung aufweisen, sind insbesondere unterschiedlich starke Außenwände und/oder unterschiedlich starke Innenwände und/oder unterschiedlich dimensionierte Verbindungsstreben, Verbindungswände, Versteifungselemente und/oder Rippen zwischen den Außenwänden und den Innenwänden vorgesehen. Mittels des erfindungsgemäßen Adapterelements, der erfindungsgemäßen Verbindungsvorrichtung und/oder des erfindungsgemäßen Sets von Adapterelementen sind insbesondere ein oder mehrere Bauteilverbunde herstellbar.

Die vorliegende Erfindung betrifft daher auch einen Bauteilverbund, insbesondere ein Möbelstück oder eine Maschine.

Der Bauteilverbund umfasst vorzugsweise mehrere Bauteile, welche insbesondere mittels mindestens einer erfindungsgemäßen Verbindungsvorrichtung, miteinander verbunden sind. Mindestens eines der Bauteile des Bauteilverbunds ist vorzugsweise als ein Leichtbauteil, insbesondere als ein Sandwichelement, ausgebildet.

Mindestens ein Verbindungselement der mindestens einen Verbindungsvorrichtung ist mittels mindestens eines erfindungsgemäßen Adapterelements, an und/oder in dem mindestens einen Bauteil festgelegt.

Die vorliegende Erfindung betrifft ferner ein Verfahren zum Herstellen einer Verbindung zwischen zwei Bauteilen und/oder zum Festlegen eines Bauteils an einem Objekt.

Der Erfindung liegt diesbezüglich die Aufgabe zugrunde, ein Verfahren bereitzustellen, mittels welchem eine stabile Verbindung zwischen zwei Bauteilen einfach herstellbar ist bzw. eine stabile Festlegung eines Bauteils an einem Objekt möglich ist.

Diese Aufgabe wird erfindungsgemäß durch die Merkmale des unabhängigen Verfahrensanspruchs gelöst.

Vorzugsweise wird bei dem Verfahren aus einem erfindungsgemäßen Set von Adapterelementen ein Adapterelement ausgewählt. Das Set von Adapterelementen ist insbesondere ein erfindungsgemäßes Set von Adapterelementen.

Bei der Auswahl wird insbesondere eine Gesamtmaterialstärke und/oder eine Kernmaterialstärke und/oder Deckschichtstärke eines Bauteils berücksichtigt, in welchem das Adapterelement und schließlich ein Verbindungselement festgelegt werden soll.

Ferner wird bei dem Verfahren vorzugsweise ein Verbindungselement einer Verbindungsvorrichtung an und/oder in dem ausgewählten Adapterelement festgelegt.

Zudem wird vorzugsweise das Adapterelement in einen in dem Bauteil vorgefertigten Aufnahmeabschnitt eingebracht.

Das Verbindungselement kann vor dem Einbringen des Adapterelements in das Bauteil in dem Adapterelement angeordnet werden. Alternativ hierzu kann vorgesehen sein, dass zunächst das Adapterelement in das Bauteil eingebracht und anschließend das Verbindungselement in dem Adapterelement festgelegt wird.

Schließlich wird vorzugsweise die Verbindung zwischen den zwei Bauteilen durch Verbinden des an und/oder in dem Adapterelement festgelegten Verbindungselements mit einem weiteren Verbindungselement der Verbindungsvorrichtung hergestellt bzw. das Bauteil an dem Objekt dadurch festgelegt, dass das an und/oder in dem Adapterelement festgelegte Verbindungselement mit dem Objekt verbunden wird.

Mit dem erfindungsgemäßen Verfahren ist insbesondere ein erfindungsgemäßer Bauteilverbund herstellbar.

Sämtliche in dieser Beschreibung und den beigefügten Ansprüchen genannten Gegenstände, Abschnitte, Objekte, Teile von Gegenständen, etc., welche im Singular aufgeführt sind, können optional, insbesondere bei weiteren Ausführungsformen, mehrfach vorgesehen sein.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Adapterelements, bei welchem ein Verbindungselement durch eine Grundfläche des Adapterelements hindurch einsetzbar ist;
- Fig. 2: eine weitere schematische perspektivische Darstellung des Adapterelements aus Fig. 1;
- Fig. 3: eine schematische perspektivische Darstellung des Adapterelements aus Fig. 1, wobei ein Verbindungselement in das Adapterelement eingesetzt wird;
- Fig. 4: einen schematischen vertikalen Längsschnitt durch das Adapterelement und ein darin anzuordnendes Verbindungselement;
- Fig. 5: eine der Fig. 4 entsprechende schematische Darstellung des Adapterelements und des Verbindungselements, wobei das Verbindungselement in dem Adapterelement festgelegt ist;
- Fig. 6: eine schematische perspektivische Darstellung eines beispielsweise als Sandwichelement ausgebildeten Bauteils, welches mit Aufnahmeabschnitten zur Aufnahme zweier Adapterelemente samt darin gegebenenfalls angeordneter Verbindungselemente versehen ist;
- Fig. 7: eine schematische perspektivische Darstellung von vier Bauteilen, welche unterschiedliche Materialstärken aufweisen und mit unterschiedlich dimensionierten Adapterelementen zur Festlegung von Verbindungselementen versehen sind;
- Fig. 8: eine schematische perspektivische Darstellung eines Teils zur Herstellung eines Grundkörpers einer zweiten Ausführungsform eines Adapterelements;
- Fig. 9: eine schematische perspektivische Darstellung zweier miteinander verbundener Teile zur Herstellung eines Grundkörpers des Adapterelements aus Fig. 8;
- Fig. 10: eine weitere schematische perspektivische Darstellung des Adapterelements aus Fig. 9, wobei darin ein Verbindungselement aufgenommen ist;
- Fig. 11: eine der Fig. 5 entsprechende schematische Schnittdarstellung durch das Adapterelement und das darin aufgenommene Verbindungselement gemäß Fig. 10;
- Fig. 12: eine schematische perspektivische Darstellung einer dritten Ausführungsform eines Adapterelements, bei welchem ein Verbindungselement optional von einer Oberseite des Adapterelements in das Adapterelement einschiebbar ist;
- Fig. 13: eine schematische Darstellung zur Illustration der Flexibilität bei der Nutzung der beschriebenen Adapterelemente;
- Fig. 14: eine schematische perspektivische Darstellung einer weiteren Ausführungsform eines Adapterelements, welches einen zentralen Grundkörper und zwei Seitenteile umfasst, wobei die Seitenteile mittels einer Rasterstruktur in unterschiedlichen Abständen von dem Grundkörper festlegbar sind;
- Fig. 15: eine schematische perspektivische Darstellung des Grundkörpers des Adapterelements aus Fig. 14;
- Fig. 16: eine schematische perspektivische Darstellung eines Seitenteils des Adapterelements aus Fig. 14;
- Fig. 17: verschiedene Kombinationsmöglichkeiten aus einem Grundkörper und einem oder mehreren Seitenteilen zur wahlweisen Bereitstellung von Adapterelementen mit unterschiedlichen Erstreckungen in der Dickenrichtung;
- Fig. 18: eine schematische perspektivische Darstellung einer weiteren Ausführungsform eines Adapterelements, bei welchem ein Seitenteil federnd an dem Grundkörper angeordnet ist;
- Fig. 19: eine schematische perspektivische Darstellung eines Grundkörpers einer weiteren Ausführungsform eines Adapterelements, bei welchem ein Seitenteil, beispielsweise das Seitenteil gemäß Fig. 18, in unterschiedlichen Positionen an dem Grundkörper festlegbar ist;
- Fig. 20: eine vergrößerte Darstellung des Bereichs XX in Fig. 19;
- Fig. 21: eine schematische perspektivische Darstellung einer weiteren Ausführungsform eines Adapterelements, bei welcher das Adapterelement einstückig ausgebildet ist;
- Fig. 22: eine schematische Seitenansicht des Adapterelements aus Fig. 21;
- Fig. 23: einen schematischen Schnitt durch das Adapterelement aus Fig. 21 längs der Linie XXIII-XXIII in Fig. 22;
- Fig. 24: eine schematische Darstellung einer Unterseite eines Adapterelements;
- Fig. 25: eine schematische perspektivische Darstellung einer weiteren Ausführungsform eines Adapterelements, bei welcher Rückhalteelemente zur optimierten Verankerung des Adapterelements in einem beispielsweise als Leichtbauplatte ausgebildeten Bauteil vorgesehen sind;
- Fig. 26: einen schematischen vertikalen Querschnitt durch das Adapterelement aus Fig. 25 im montierten Zustand desselben; und
- Fig. 27: eine schematische perspektivische Darstellung von Adapterelementen gemäß der Ausführungsform in Fig. 25, wobei die Adapterelemente in verschiedenen Montagezuständen an einem Bauteil sowie zusammen mit einem Verbindungselement dargestellt sind.

Gleiche oder funktional äquivalente Elemente sind in sämtlichen Figuren mit denselben Bezugszeichen versehen.

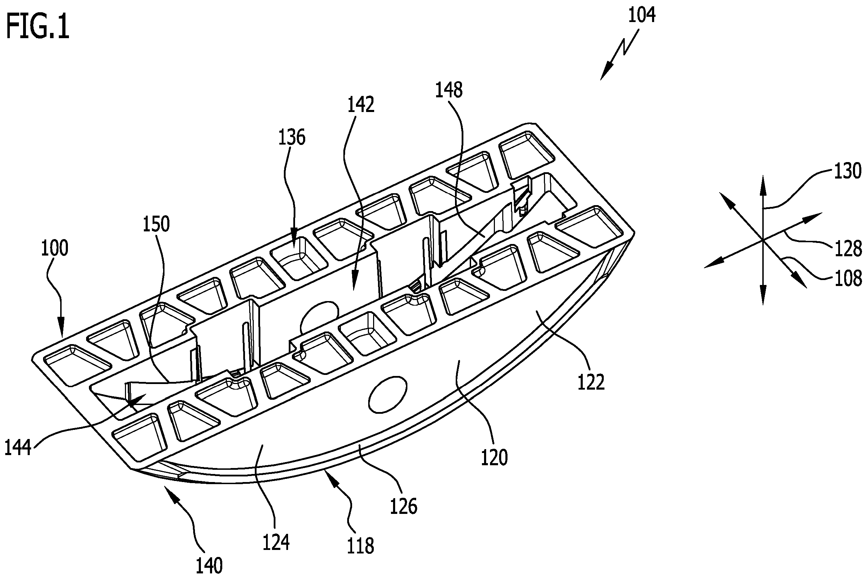

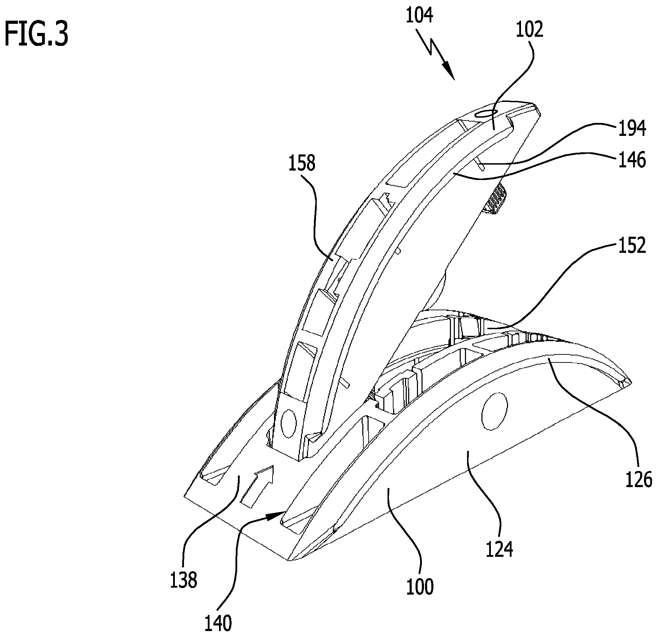

Eine in den Fig. 1 bis 5 dargestellte erste Ausführungsform eines als Ganzes mit 100 bezeichneten Adapterelements dient insbesondere der Aufnahme eines beispielsweise in den Fig. 3 bis 5 dargestellten Verbindungselements 102 einer als Ganzes mit 104 bezeichneten Verbindungsvorrichtung.

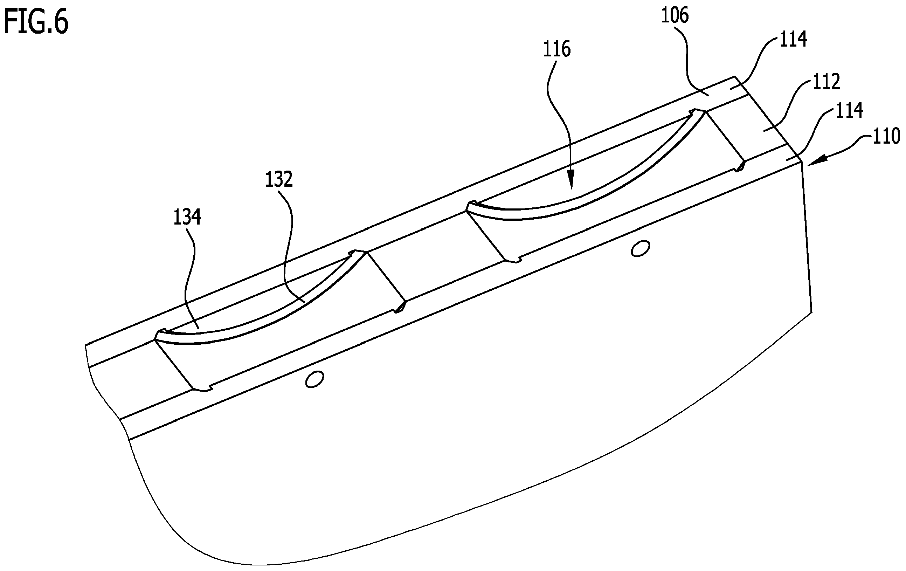

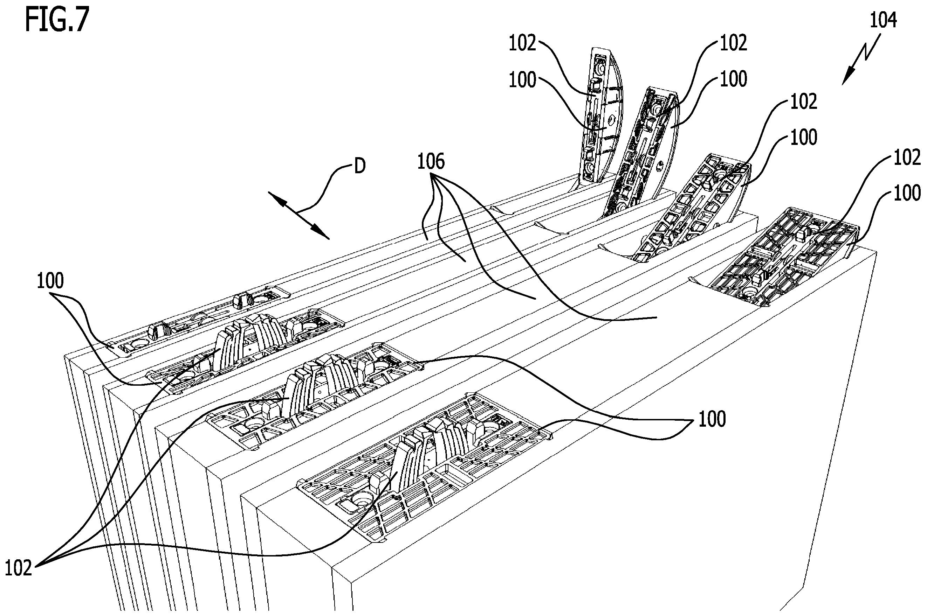

Mittels des Adapterelements 100 ist ein Verbindungselement 102 insbesondere in einem Bauteil 106 anordenbar, um letztlich dieses Bauteil 106 mit einem weiteren Bauteil 106, das beispielsweise ebenfalls mit einem oder mehreren Verbindungselementen 102 versehen ist, zu verbinden (siehe insbesondere die Fig. 6 und 7).

Ausgangspunkt für die Nutzung des Adapterelements 100 ist die Existenz der Verbindungselemente 102, welche sich insbesondere zur Festlegung in Vollholzmaterial, MDF-Platten, etc. eignen. Ein derartiges Material liegt jedoch häufig in vergleichsweise dünnen Materialstärken von beispielsweise 15 mm oder 18 mm vor. Die Verbindungselemente 102 weisen entsprechend eine vergleichsweise geringe Erstreckung in einer Dickenrichtung 108 auf, welche im montierten Zustand des jeweiligen Verbindungselements 102 einer Richtung entspricht, in welcher die Materialstärke des Bauteils 106 bestimmt wird.

Beispielsweise in als Sandwichelement 110 ausgebildeten Bauteilen 106 kann sich durch den konstruktiven Aufbau des Bauteils 106 unter Umständen eine nur unzureichende Festlegung des Verbindungselements 102 in dem Bauteil 106 ergeben.

Insbesondere dann, wenn das Bauteil 106 einen Kern 112 aufweist, welcher eine im Vergleich zu zwei den Kern 112 begrenzenden Deckschichten 114 geringe Dichte und/oder Steifigkeit und/oder Tragkraft aufweist, kann ein Verbindungselement 102 möglicherweise nur unzureichend in dem Bauteil 106 fixiert werden.

Vorzugsweise ist daher ein Adapterelement 100 vorgesehen, mittels welchem das Verbindungselement 102 indirekt in dem Bauteil 106 festlegbar ist.

Das Adapterelement 100 ist dabei vorzugsweise an die Ausdehnung des Bauteils 106, insbesondere an eine Gesamtdicke D, dessen Materialstärke und/oder eine Dicke des Kerns 112 und/oder eine Dicke der Deckschichten 114, angepasst.

Vorzugsweise erstreckt sich das Adapterelement 100 über eine Dicke des Kerns 112 hinweg von einer der Deckschichten 114 bis zur weiteren der Deckschichten 114.

Insbesondere ist das Adapterelement 100 vorzugsweise an den bezüglich des Kerns 112 einander gegenüberliegenden Deckschichten 114 festlegbar oder festgelegt, so dass das Adapterelement 100 unabhängig von den Materialeigenschaften des Kerns 112 zuverlässig und stabil an dem Bauteil 106 festlegbar ist. Entsprechend ist damit auch ein stabil und zuverlässig an dem Adapterelement 100 angeordnetes Verbindungselement 102 stabil in dem Bauteil 106 festlegbar.

Das Bauteil 106 ist hierfür insbesondere mit einem oder mehreren Aufnahmeabschnitten 116 versehen, in welchen das eine oder die mehreren Adapterelemente 100 anordenbar sind.

Jeder Aufnahmeabschnitt 116 ist vorzugsweise zumindest abschnittsweise komplementär zu einer Außenform des jeweiligen Adapterelements 100 ausgebildet, insbesondere um eine zuverlässige Festlegung des Adapterelements 100, beispielsweise eine formschlüssige Festlegung in mindestens einer Richtung, in dem Bauteil 106, zu gewährleisten.

Auf die konkreten Details unterschiedlicher Ausführungsformen von Adapterelementen 100 wird nachfolgend näher eingegangen.

In der in den Fig. 1 bis 5 dargestellten Ausführungsform eines Adapterelements 100 umfasst dieses einen Festlegungsabschnitt 118, mittels welchem das Adapterelement 100 in einem Bauteil 106 festlegbar ist.

Der Festlegungsabschnitt 118 ist insbesondere an Außenwänden 120 eines Grundkörpers 122 des Adapterelements angeordnet und/oder ausgebildet.

Beispielsweise sind zwei einander gegenüberliegende Außenwände 120 des Grundkörpers 122 vorgesehen, welche Seitenflächen 124 des Adapterelements 100 bilden und einen oder mehrere Haltevorsprünge 126 aufweisen.

Erfindungsgemäß ist vorgesehen, dass der Haltevorsprung 126 gekrümmt, insbesondere kreisbogenabschnittsförmig gekrümmt, ist.

Vorzugsweise sind zwei an einander gegenüberliegenden Seitenflächen 124 des Grundkörpers 122 angeordnete Haltevorsprünge 126 vorgesehen, welche voneinander weg ragen.

Die Haltevorsprünge 126 sind vorzugsweise zumindest näherungsweise spiegelsymmetrisch zueinander ausgebildet, insbesondere bezüglich einer in einer Längsrichtung 128 sowie in einer Tiefenrichtung 130 sich erstreckenden Längsmittelebene des Adapterelements 100.

Das Adapterelement 100 ist in einen Aufnahmeabschnitt 116 einbringbar, welcher mit Aufnahmenuten 132 versehen ist, die im Wesentlichen komplementär zu den Haltevorsprüngen 126 ausgebildet sind.

Die Aufnahmenuten 132 erstrecken sich insbesondere längs der Dickenrichtung 108 in die jeweilige Deckschicht 114 des Bauteils 106 hinein, so dass in den Deckschichten 114 Abstützvorsprünge 134 zum Abstützen der Haltevorsprünge 126 des Adapterelements 100 gebildet sind (siehe insbesondere Fig. 6 und 7).

Der Grundkörper 122 des Adapterelements 100 umfasst ferner eine die beiden Seitenflächen 124 miteinander verbindende Oberseite 136 sowie eine der Oberseite 136 gegenüberliegende Grundfläche 138, welche insbesondere eine Unterseite 140 des Grundkörpers 122 bildet oder umfasst.

Die Grundfläche 138 und/oder die Unterseite 140 sind insbesondere gekrümmt ausgebildet, beispielsweise zylindermantelabschnittsförmig gekrümmt.

Die Grundfläche und/oder die Unterseite 140 grenzen aufgrund der Krümmung vorzugsweise an zwei Enden oder Seiten an die Oberseite 136 an.

Das Adapterelement 100 umfasst einen Aufnahmeabschnitt 142 zur Aufnahme eines Verbindungselements 102.

Der Aufnahmeabschnitt 142 zur Aufnahme des Verbindungselements 102 entspricht in funktioneller Hinsicht vorzugsweise im Wesentlichen der Funktion des Aufnahmeabschnitts 116 im Bauteil 106 zur Aufnahme des Adapterelements 100.

Der Aufnahmeabschnitt 142 des Adapterelements 100 ist insbesondere innerhalb des Grundkörpers 122 des Adapterelements 100 gebildet.

Insbesondere umgibt der Grundkörper 122 einen Hohlraum 144, in welchem ein Verbindungselement 102 zumindest abschnittsweise aufnehmbar und/oder festlegbar ist.

Der Hohlraum 144 ist hierzu vorzugsweise zumindest abschnittsweise im Wesentlichen komplementär zu zumindest einem Abschnitt des Verbindungselements 102 ausgebildet.

Insbesondere ist der Hohlraum 144 vorzugsweise zumindest abschnittsweise komplementär zu einer Basisform ausgebildet, hinsichtlich welcher mehrere Verbindungselemente 102 unterschiedlicher Bauart miteinander übereinstimmen.

Beispielsweise ist der Hohlraum 144 des Adapterelements 100 zumindest abschnittsweise komplementär zu einem oder mehreren Haltevorsprüngen 146 eines oder mehrerer Verbindungselemente 102 ausgebildet.

Der Aufnahmeabschnitt 142 des Adapterelements 100 umfasst eine oder mehrere Aufnahmenuten 148, welche zur Aufnahme von Haltevorsprüngen 146 eines oder mehrerer Verbindungselemente 102 dienen.

Die Aufnahmenuten 148 des Adapterelements 100 zur Festlegung der Haltevorsprünge 146 des Verbindungselements 102 entsprechen somit in funktionaler Hinsicht den Aufnahmenuten 132 der Aufnahmeabschnitte 116 des Bauteils 106 zur Aufnahme der Haltevorsprünge 126 des Adapterelements 100. Sämtliche Merkmale und/oder Vorteile der Aufnahmenuten 148 des Adapterelements 100 zur Festlegung der Haltevorsprünge 146 des Verbindungselements 102 können vorzugsweise einzeln oder in beliebiger Kombination auch bei den Aufnahmenuten 132 der Aufnahmeabschnitte 116 des Bauteils 106 vorgesehen sein.

Vorzugsweise erstrecken sich eine oder mehrere Aufnahmenuten 148 in dem Aufnahmeabschnitt 142 des Adapterelements 100 längs einer Ebene, welche insbesondere parallel zu einer oder mehreren Seitenflächen 124 und/oder senkrecht zur Dickenrichtung 108 des Adapterelements 100 ausgerichtet ist.

Insbesondere sind zwei einander gegenüberliegende Aufnahmenuten 148 vorgesehen, welche sich insbesondere voneinander weg erstrecken und/oder zumindest näherungsweise spiegelsymmetrisch zueinander bezüglich einer in der Längsrichtung 128 und der Tiefenrichtung 130 verlaufenden Längsmittelebene des Adapterelements 100 ausgebildet sind.

Die Aufnahmenuten 148 sind gekrümmt ausgebildet, beispielsweise kreisbogenabschnittsförmig gekrümmt.

Aufgrund der einen oder der mehreren Aufnahmenuten 148 ist in dem Aufnahmeabschnitt 142 vorzugsweise mindestens ein Abstützvorsprung 150 zum Abstützen eines oder mehrerer Haltevorsprünge 146 eines Verbindungselements 102 gebildet.

In einem Benutzungszustand des Adapterelements 100, in welchem dieses beispielsweise zum Verbinden zweier Bauteile 106 dient, ist das Adapterelement 100 vorzugsweise derart in einem Bauteil 106 festgelegt, dass die Oberseite 136 des Adapterelements 100 in Richtung des weiteren Bauteils 106 weist.

Die Oberseite 136 des Adapterelements 100 ist somit diejenige Seite des Adapterelements 100, an welcher das an dem Adapterelement 100 und/oder in dem Adapterelement 100 festgelegte Verbindungselement 102 zum Herstellen der Verbindung zwischen den Bauteilen 106 wirkt und/oder zum Herstellen der Verbindung beispielsweise für ein weiteres Verbindungselement 102 zugänglich ist.

Das Verbindungselement 102 kann bei einer (noch zu beschreibenden) Ausführungsform beispielsweise von der Oberseite 136 her in den Aufnahmeabschnitt 142 eingebracht werden.

Bei der in den Fig. 1 bis 5 dargestellten Ausführungsform ist hingegen vorgesehen, dass das Verbindungselement 102 von der Unterseite 140, insbesondere durch die Grundfläche 138 hindurch, in den Aufnahmeabschnitt 142 des Adapterelements 100 einbringbar ist.

Eine hierfür in der Unterseite 140 und/oder der Grundfläche 138 vorgesehene Öffnung 152 in dem Grundkörper 122 kann hierfür beispielsweise an die Form des Verbindungselements 102 derart angepasst sein, dass das Verbindungselement 102 ohne eine erforderliche Rotation längs der Tiefenrichtung 130 in das Adapterelement 100 einschiebbar ist.

Vorteilhaft kann es hingegen sein, wenn das Adapterelement 100 einen Einschwenkabschnitt 154 aufweist, mittels welchem ein Verbindungselement 102 vereinfacht in den Aufnahmeabschnitt 142 des Adapterelements 100 einbringbar ist.

Der Einschwenkabschnitt 154 umfasst insbesondere einen Stützabschnitt 156, an welchem ein Verbindungselement 102 anlegbar und/oder abstützbar ist, um dieses beispielsweise über eine Schwenkbewegung insbesondere mit reduziertem Kraftaufwand in den Aufnahmeabschnitt 142 einzubringen.

Der Stützabschnitt 156 dient insbesondere dem Abstützen eines Verbindungselements 102 an einem oder mehreren Haltevorsprüngen 146 des Verbindungselements 102, wobei vorzugsweise zugleich eine Grundfläche 158 des Verbindungselements 102 abgestützt wird und durch geeignete Rotation des Verbindungselements 102 ein Einschwenken in den Aufnahmeabschnitt 142 mit vorzugsweise besonders geringem Kraftaufwand möglich wird.

Der Einschwenkabschnitt 154 kann insbesondere dann vorteilhaft sein, wenn das Verbindungselement 102 besonders stabil mit dem Adapterelement 100 verbunden werden soll und hierfür beispielsweise ein oder mehrere Arretierelemente 160, beispielsweise Rastelemente 162, mit hohen Federkräften überwunden werden müssen.

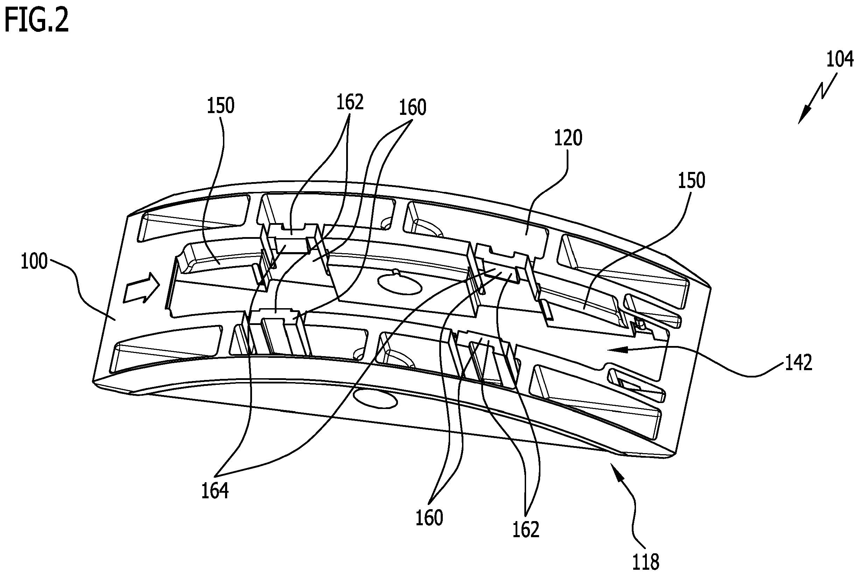

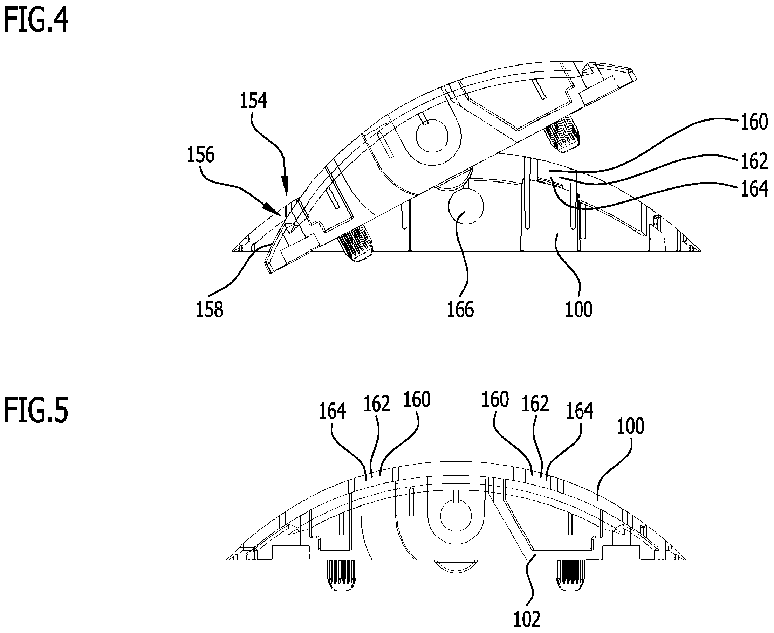

Wie insbesondere den Fig. 2 und 5 zu entnehmen ist, sind bei dem Adapterelement 100 vorzugsweise ein oder mehrere Arretierelemente 160, insbesondere Rastelemente 162, derart vorgesehen, dass diese in einem montierten Zustand des Verbindungselements 102 dasselbe längs der Tiefenrichtung 130 hintergreifen.

Insbesondere sind Rastvorsprünge 164 an einer dem jeweiligen Abstützvorsprung 150 gegenüberliegenden Seite der Aufnahmenut 148 angeordnet, so dass beispielsweise Haltevorsprünge 146 des Verbindungselements 102 zwischen den Abstützvorsprüngen 150 und den Arretierelementen 160, insbesondere den Rastelementen 162, aufnehmbar, beispielsweise einklemmbar, und somit längs der Tiefenrichtung 130 formschlüssig festlegbar sind.

Die in den Fig. 1 bis 5 dargestellte Ausführungsform des Adapterelements 100 weist ferner vorzugsweise eine oder mehrere Durchtrittsöffnungen 166 auf, welche beispielsweise in einer oder beiden Außenwänden 120 und/oder beiden Seitenflächen 124 angeordnet und/oder ausgebildet sind.

Durch die eine oder die mehreren Durchtrittsöffnungen 166 ist der Aufnahmeabschnitt 142 vorzugsweise für mindestens ein Werkzeug zugänglich.

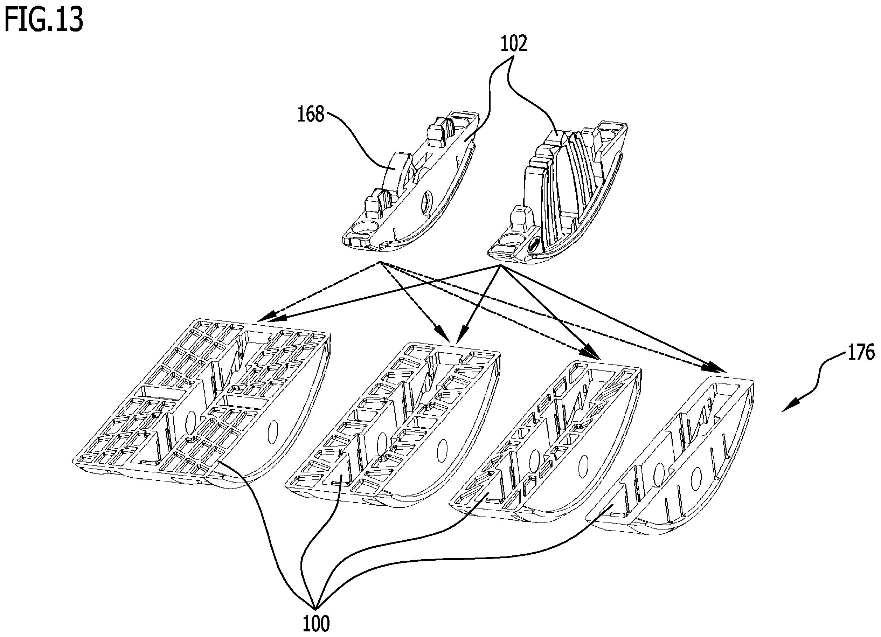

Die Durchtrittsöffnung 166 dient insbesondere dazu, ein bewegliches Halteelement 168 eines ein solches Halteelement 168 umfassenden Verbindungselements 102 zu betätigen, wenn dieses Verbindungselement 102 in dem Adapterelement 100 aufgenommen ist (siehe insbesondere Fig. 13 in Kombination mit Fig. 5).

Durch die beidseitige Anordnung einer Durchtrittsöffnung 166 ist das Halteelement 168 vorzugsweise unabhängig von der Orientierung des Verbindungselements 102 in dem Adapterelement 100 zugänglich.

Die eine oder die beiden Durchtrittsöffnungen 166 können beispielsweise als ein Langloch oder als längliches Loch oder als Mehrfachloch ausgebildet sein, so dass insbesondere beispielsweise Halteelemente 168 unterschiedlicher Verbindungselemente 102 in unterschiedlichen Tiefen längs der Tiefenrichtung zugänglich sind.

Wie Fig. 7 zu entnehmen ist, kann das Adapterelement 100, welches insbesondere in verschiedenen Dimensionen längs der Dickenrichtung 108 ausgebildet sein kann, beispielsweise in einen geeigneten Aufnahmeabschnitt 116 in einem Bauteil 106 eingeschoben werden.

Ebenso aus Fig. 7 sowie auch aus Fig. 13 geht zudem hervor, dass unterschiedliche Arten von Adapterelementen 100, insbesondere solche Adapterelemente 100 mit unterschiedlichen Erstreckungen längs der Dickenrichtung 108, vorzugsweise identisch dimensionierte Aufnahmeabschnitte 142 aufweisen, so dass unabhängig von der Ausgestaltung des jeweiligen Festlegungsabschnitts 118 des jeweiligen Adapterelements 100 die Aufnahme ein und desselben Verbindungselements 102 möglich ist. Insbesondere sind Verbindungselemente 102 unterschiedlicher Art in den Adapterelementen 100 aufnehmbar, zumindest dann, wenn die unterschiedlichen Arten von Verbindungselementen 102 in einem zum Festlegen derselben vorgesehenen Bereich identische oder zumindest hochgradig ähnliche Formgebungen aufweisen.

Die in den Fig. 1 bis 5 dargestellte Ausführungsform des Adapterelements 100 ist beispielsweise einstückig ausgebildet. Insbesondere ist der Grundkörper 122, welcher den Festlegungsabschnitt 118 und den Aufnahmeabschnitt 142 umfasst und den Hohlraum 144 umgibt, als ein einziges Bauteil in einem Spritzgussverfahren, beispielsweise einem einzigen Spritzgussschritt, hergestellt oder herstellbar.

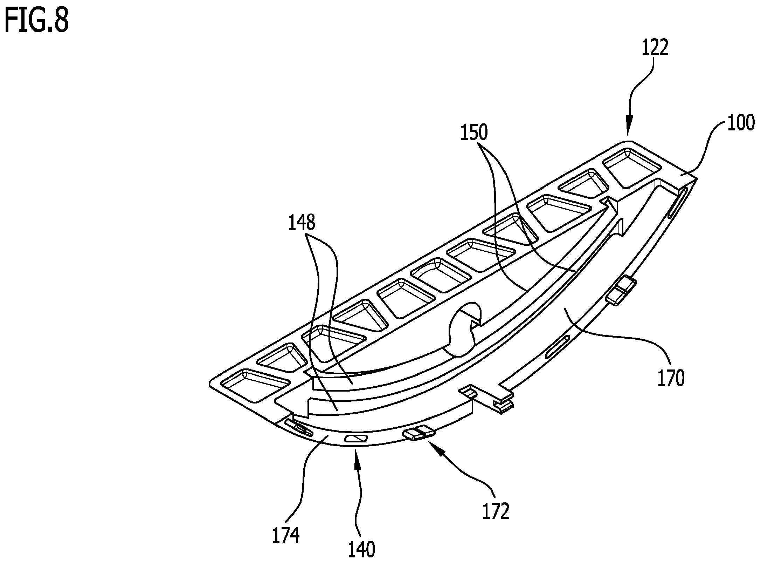

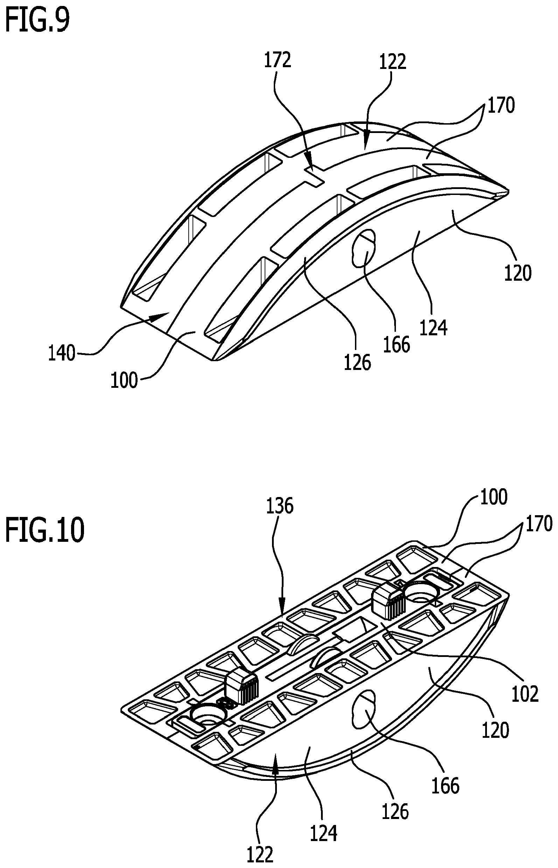

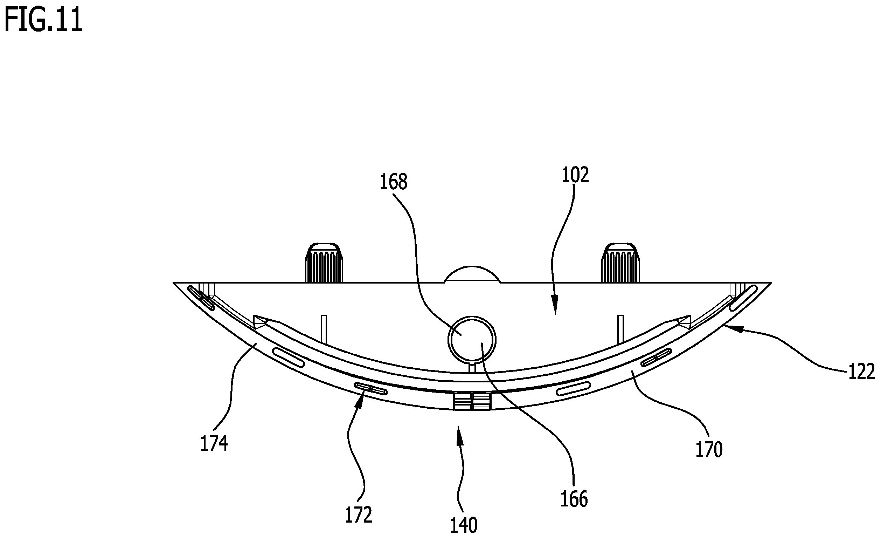

Eine in den Fig. 8 bis 11 dargestellte alternative Ausführungsform eines Adapterelements 100 unterscheidet sich von der in den Fig. 1 bis 5 dargestellten Ausführungsform im Wesentlichen dadurch, dass der Grundkörper 122 mehrteilig ausgebildet ist.

Insbesondere sind zur Herstellung eines Grundkörpers 122 vorzugsweise zwei Teile 170 vorgesehen, welche zur Fertigstellung des Grundkörpers 122 beispielsweise miteinander verbindbar sind, insbesondere mittels einer Nut-Feder-Verbindung 172.

Alternativ oder ergänzend hierzu kann eine Verbindung der zwei Teile 170 mittels einer Rastverbindung und/oder Schraubverbindung und/oder stoffschlüssigen Verbindung vorgesehen sein.

Die zwei Teile 170 sind insbesondere an einer die Unterseite 140 des Grundkörpers 122 bildenden Wandung 174 miteinander verbindbar, insbesondere aneinander anlegbar und aneinander festlegbar.

Die Teile 170 sind vorzugsweise identisch miteinander ausgebildet, so dass durch zwei identisch miteinander ausgebildete Hälften des Grundkörpers 122 der Grundkörper 122 zusammensetzbar ist.

Wie insbesondere Fig. 8 zu entnehmen ist, kann vorgesehen sein, dass ein Adapterelement 100 mehrere Aufnahmenuten 148 und/oder Abstützvorsprünge 150 in unterschiedlichen Tiefen längs der Tiefenrichtung 130 aufweist. Hierdurch sind insbesondere unterschiedliche Arten von Verbindungselementen 102, welche sich beispielsweise in ihrer Dimensionierung längs der Tiefenrichtung 130 voneinander unterscheiden, in demselben Adapterelement 100, insbesondere derselben Art von Adapterelement 100, anordenbar.

Dies ist selbstverständlich unabhängig von der Anzahl der Teile 170 zur Herstellung des Grundkörpers 122, wird vorliegend jedoch aufgrund der vereinfachten Darstellungsmöglichkeit mit Hinblick auf die Ausführungsform gemäß den Fig. 8 bis 11 erläutert.

Ein Verbindungselement 102 wird insbesondere dadurch in dem Adapterelement 100 festgelegt, dass dieses zwischen die zwei Teile 170 eingelegt und durch Verbinden der zwei Teile 170 miteinander zwischen den zwei Teilen 170 fixiert, insbesondere formschlüssig festgelegt, wird.

Im Übrigen stimmt die in den Fig. 8 bis 11 dargestellte Ausführungsform des Adapterelements 100 hinsichtlich Aufbau und Funktion mit der in den Fig. 1 bis 5 dargestellten Ausführungsform überein, so dass auf deren vorstehende Beschreibung insoweit Bezug genommen wird.

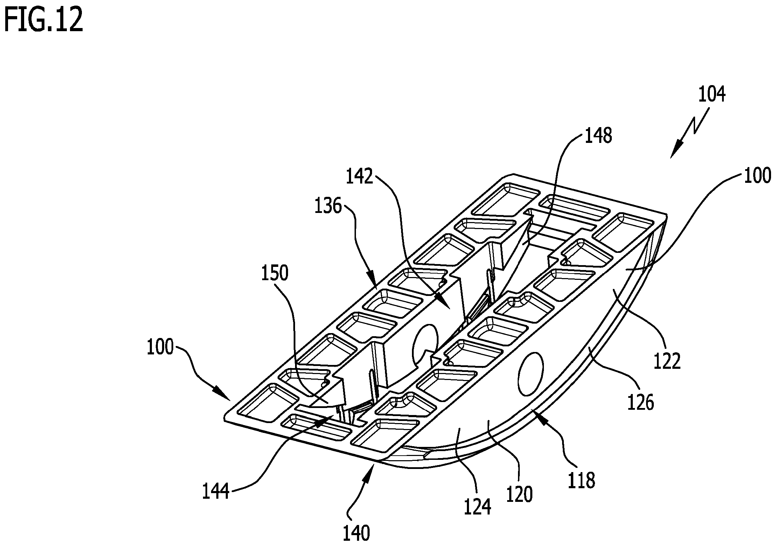

Eine in Fig. 12 dargestellte weitere alternative Ausführungsform eines Adapterelements 100 unterscheidet sich von der in den Fig. 1 bis 5 dargestellten Ausführungsform im Wesentlichen dadurch, dass das Verbindungselement 102 wahlweise von der Unterseite 140 in den Aufnahmeabschnitt 142 oder aber von der Oberseite 136 in den Aufnahmeabschnitt 142 einbringbar ist.

Beim Einbringen durch die Unterseite 140 kann das Verbindungselement 102 insbesondere an den Rastvorsprüngen 164 vorbeibewegt werden, um die Haltevorsprünge 146 des Verbindungselements 102 zwischen den Rastvorsprüngen 164 und den Abstützvorsprüngen 150 aufzunehmen.

Beim Einbringen von der Oberseite 136 wird das Verbindungselement 102 mit dessen Haltevorsprüngen 146 insbesondere längs der Aufnahmenuten 148 des Adapterelements 100 in dasselbe eingeschoben.

Im Übrigen stimmt die in Fig. 12 dargestellte Ausführungsform des Adapterelements 100 hinsichtlich Aufbau und Funktion mit der in den Fig. 1 bis 5 dargestellten Ausführungsform überein, so dass auf deren vorstehende Beschreibung insoweit Bezug genommen wird.

Wie vorstehend bereits erwähnt, illustriert Fig. 13 insbesondere, dass verschiedene Ausführungsformen von Adapterelementen 100 vorgesehen sein können, welche sich hinsichtlich der Erstreckung in der Dickenrichtung 108 voneinander unterscheiden, zugleich jedoch der Aufnahme von zumindest abschnittsweise identisch oder hochgradig ähnlich geformten Verbindungselementen 102 dienen.

Mehrere Adapterelemente 100 unterschiedlicher Art, insbesondere unterschiedlicher Erstreckung längs der Dickenrichtung 108, können insbesondere Bestandteil eines Sets 176 von Adapterelementen 100 bilden.

Aus einem solchen Set 176 können insbesondere angepasst an die jeweilige Materialstärke eines Bauteils 106 einzelne Adapterelemente 100 ausgewählt werden, um angepasst an das jeweilige Bauteil 106 eine optimale Verankerung eines Verbindungselements 102 in dem Bauteil 106 zu ermöglichen.

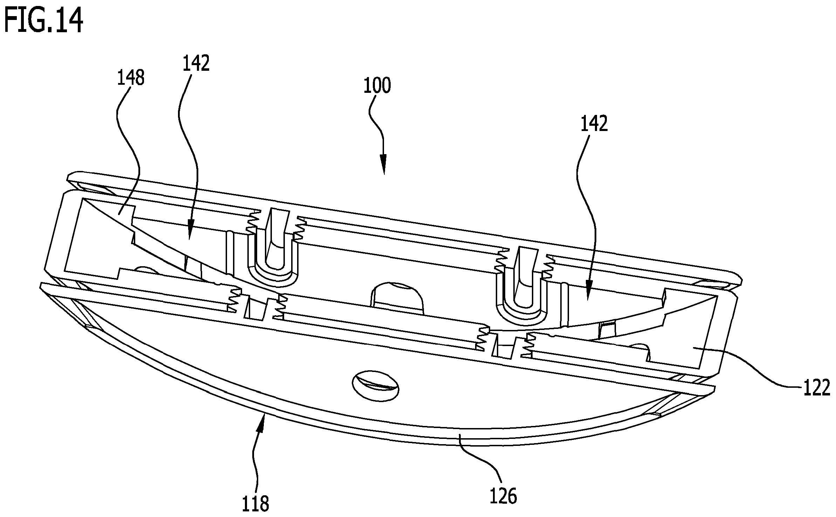

Eine in den Fig. 14 bis 17 dargestellte weitere Ausführungsform eines Adapterelements 100 unterscheidet sich von der in den Fig. 1 bis 5 dargestellten Ausführungsform im Wesentlichen dadurch, dass das Adapterelements 100 mehrteilig ausgebildet ist.

Im Gegensatz zu der Ausgestaltung gemäß der Fig. 8 bis 11 ist hingegen keine Teilung des Adapterelements 100 im Bereich des Aufnahmeabschnitts 142 vorgesehen. Vielmehr ist der Aufnahmeabschnitt 142 zumindest näherungsweise vollständig durch einen einstückigen Grundkörper 122 des Adapterelements 100 gebildet.

Die weiteren Teile 170 des Adapterelements 100, welche zusätzlich zu dem Grundkörper 122 vorgesehen sind, sind ein oder mehrere Seitenteile 178, welche insbesondere in der Dickenrichtung 108 an den Grundkörper 122 angrenzend an demselben angeordnet werden können.

Nachfolgend wird sowohl auf ein Seitenteil 178 im Singular als auch im Plural Bezug genommen. Grundsätzlich können bei sämtlichen Varianten des Adapterelements nur ein einzelnes oder auch zwei Seitenteile 178 vorgesehen sein. Darüber hinaus ist es denkbar, dass an den Seitenteilen 178 selbst weitere Seitenteile 178 anordenbar sind (nicht dargestellt), um noch weitere Erstreckungen des Adapterelements 100 längs der Dickenrichtung 108 zu ermöglichen.

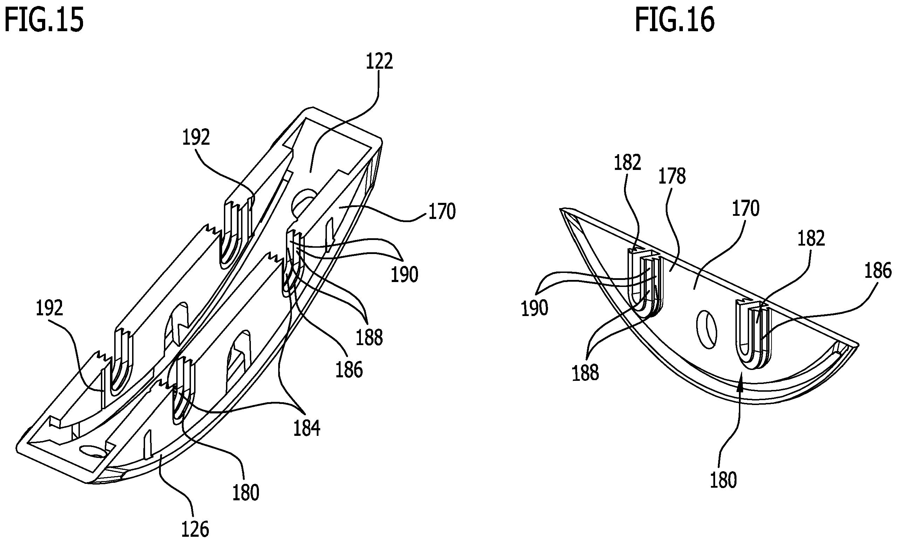

Wie insbesondere Fig. 15 zu entnehmen ist, umfasst der Grundkörper 122 vorzugsweise bereits sowohl den Aufnahmeabschnitt 142 als auch einen oder mehrere Haltevorsprünge 126 zur Festlegung in einem Bauteil 106.

Die Seitenteile 178 weisen vorzugsweise jeweils ein oder mehrere Haltevorsprünge 126 auf.

Vorzugsweise ist der Grundkörper 122 für sich genommen und/oder in Kombination mit einem Seitenteil 178 und/oder in Kombination mit zwei oder mehr Seitenteilen 178 in einem Bauteil 106 festlegbar, beispielsweise mittels Haltevorsprüngen 126.

Wie den Fig. 14 bis 16 ferner zu entnehmen ist, umfasst das Adapterelement 100 vorzugsweise einen oder mehrere Verbindungsbereiche 180.

Beispielsweise sind an jeder den Grundkörper 122 in Dickenrichtung 108 begrenzenden Außenwand 120 (oder auch nur an einer dieser Außenwände 120) jeweils ein oder mehrere Verbindungsbereiche 180 angeordnet, welche mit einem oder mehreren zumindest abschnittsweise komplementär hierzu ausgebildeten Verbindungsbereichen 180 eines Seitenteils 178 in Eingriff bringbar sind.

Beispielsweise umfasst jedes Seitenteil 178 jeweils ein oder mehrere Distanzierelemente 182, welche in eine oder mehrere, zumindest abschnittsweise komplementär zu einem Distanzierelement 182 ausgebildete Distanzierelementaufnahmen 184 einbringbar sind.

Mittels der Distanzierelemente 182 und/oder der Distanzierelementaufnahmen 184 sind insbesondere eine oder mehrere Rasterstrukturen 186 gebildet, wobei die Seitenteile 178 hierdurch vorzugsweise in unterschiedlichen Abständen von dem Grundkörper 122 relativ zu demselben festlegbar sind.

Insbesondere kann vorgesehen sein, dass ein oder mehrere Haltevorsprünge 126 des jeweiligen Seitenteils 178 mittels der Rasterstruktur 168 in unterschiedlichen Abständen von dem Grundkörper 122 festlegbar sind.

Günstig kann es sein, wenn eine oder mehrere Distanzierelementaufnahmen 184 und/oder ein oder mehrere Distanzierelemente 182 jeweils einen oder mehrere Distanziervorsprünge 188 und/oder eine oder mehrere Distanzierausnehmungen 190 aufweisen.

Die Distanziervorsprünge 188 und/oder Distanzierausnehmungen 190 dienen insbesondere der Ausbildung einer Rasterstruktur 186.

Vorzugsweise sind die Distanziervorsprünge 188 zumindest abschnittsweise komplementär zu den Distanzierausnehmungen 190 ausgebildet und/oder angeordnet.

Vorteilhaft kann es sein, wenn das Distanzierelement 182 und/oder die Distanzierelementaufnahme 184 jeweils einen oder mehrere Distanziervorsprünge 188 und/oder eine oder mehrere Distanzierausnehmungen 190 umfasst.

Es kann vorgesehen sein, dass das Distanzierelement 182 beispielsweise im Wesentlichen U-förmig ausgebildet ist und in eine hierzu komplementäre Distanzierelementaufnahme 184 in dem Grundkörper 122 einbringbar ist.

Wie Fig. 15 ferner zu entnehmen ist, kann ein Adapterelement 100, insbesondere unabhängig von der übrigen Ausgestaltung desselben, mit einer oder mehreren Positioniernuten 192 versehen sein. Wie insbesondere in Verbindung mit Fig. 3 ersichtlich ist, kann eine solche Positioniernut 192 insbesondere mit einem Positioniervorsprung 194 eines Verbindungselements 102 in Eingriff gebracht werden, um das Verbindungselement 102 in einer gewünschten Vorzugsposition in dem Aufnahmeabschnitt 142 des Adapterelements 100 festlegen zu können.

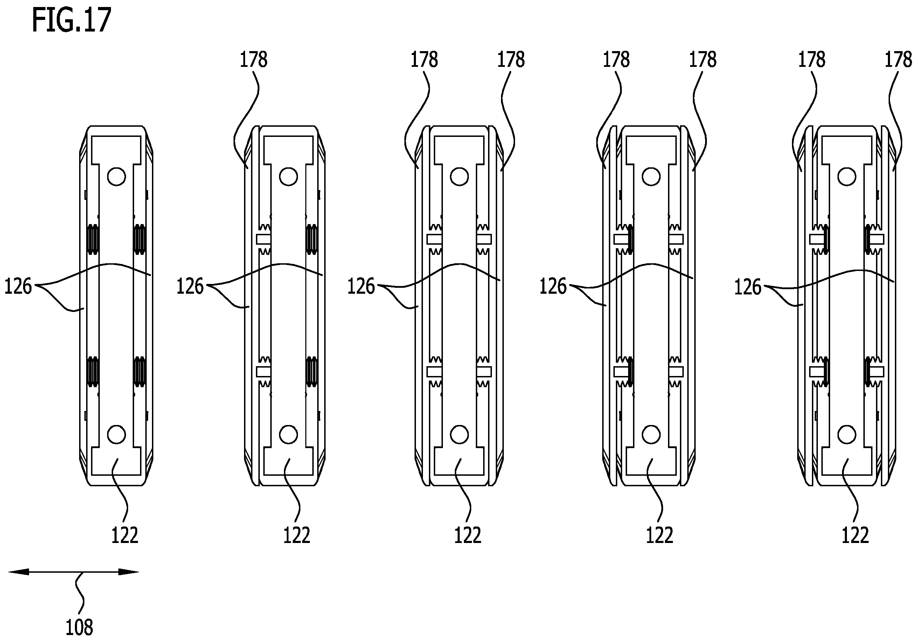

In Fig. 17 sind unterschiedliche Nutzungsmöglichkeiten für das in den Fig. 14 bis 16 dargestellte Adapterelement 100 dargestellt.

In Fig. 17 von links nach rechts gehend ist dabei zunächst lediglich der Grundkörper 122 mit entsprechend in der Dickenrichtung 108 minimalem Abstand zwischen den effektiven Haltevorsprüngen 126 vorgesehen, während die im Bild nach rechts darauffolgenden Nutzungsvarianten des Adapterelements 100 kontinuierlich zunehmende Ausmaße in der Dickenrichtung 108 aufweisen, da nacheinander zunächst ein einziges Seitenteil 178 in einer Minimalerstreckungsposition an dem Grundkörper 122 angeordnet ist, dann darauffolgend zwei Seitenteile 178 jeweils in der Minimalerstreckungsposition derselben. Schließlich ist eine nach außen versetzte Festlegung zunächst eines Seitenteils 178 und schließlich beider Seitenteile 178 dargestellt.

Sowohl der Grundkörper 122 als auch die Seitenteile 178 sind insbesondere einstückig herstellbar und/oder ausgebildet. Beispielsweise kann die Herstellung des Grundkörpers 122 und/oder eines oder mehrerer Seitenteile 178 in einem Spritzgussverfahren, insbesondere einem Kunststoff-Spritzgussverfahren, vorgesehen sein.

Im Übrigen stimmt die in den Fig. 14 bis 17 dargestellte Ausführungsform eines Adapterelements 100 hinsichtlich Aufbau und Funktion mit der in den Fig. 1 bis 5 dargestellten Ausführungsformen überein, so dass auf deren vorstehende Beschreibung insoweit Bezug genommen wird.

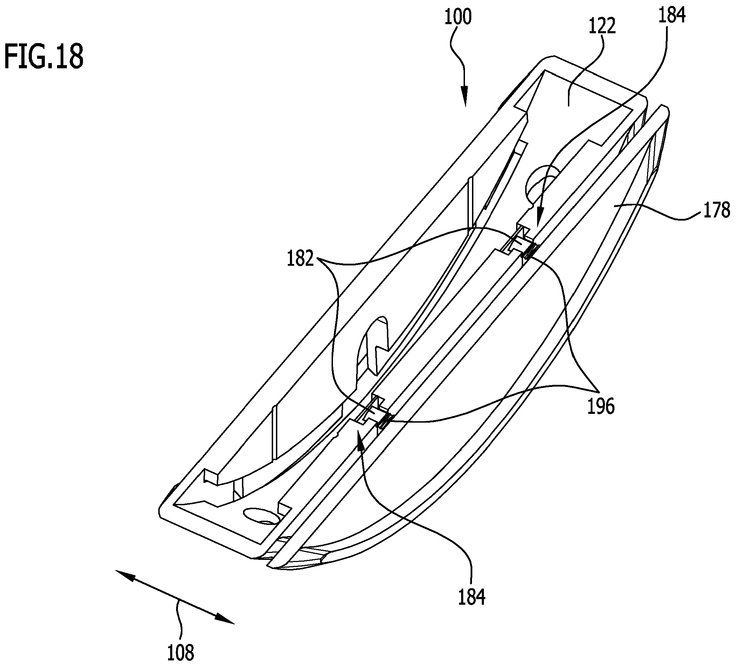

Eine in Fig. 18 dargestellte weitere alternative Ausführungsform eines Adapterelements 100 unterscheidet sich von der in den Fig. 14 bis 17 dargestellten Ausführungsform im Wesentlichen dadurch, dass die Distanzierelemente 182 federnd in den Distanzierelementaufnahmen 184 festgelegt oder festlegbar sind.

Eine oder mehrere Distanzierfedern 196 sind dabei insbesondere als Druckfedern zwischen dem Grundkörper 122 und einem Seitenteil 178 angeordnet, so dass die Distanzierfedern 196 insbesondere das Seitenteil 178 in einer Dickenrichtung 108 von dem Grundkörper 122 nach außen wegdrücken. Mittels einer solchen Ausgestaltung eines Adapterelements 100 können insbesondere Verbindungselemente 102 in Bauteilen 106 mit variierenden Dicken der Aufnahmeabschnitte 116 festgelegt werden, ohne dass bei dem Adapterelement 100 stets im Voraus eine exakte Erstreckung in der Dickenrichtung 108 eingestellt werden muss.

Dadurch, dass die Distanzierfeder 196 in der Dickenrichtung 108 und somit senkrecht zu einer Auszugsrichtung (Tiefenrichtung 130) wirkt, muss die mindestens eine Distanzierfeder 196 im montierten Zustand des Adapterelements 100 samt eines darin aufgenommenen Verbindungselements 102 zur Verbindung von Bauteilen 106 miteinander keine Haltekräfte zum Halten der Bauteile 106 aufbringen. Vielmehr muss die mindestens eine Distanzierfeder 196 lediglich für eine zuverlässige Verankerung der Haltevorsprünge 126 in den Abschnittsvorsprüngen 134 des jeweiligen Bauteils 106 sorgen.

Um ein unerwünschtes Trennen des Seitenteils 178 von dem Grundkörper 122 zu vermeiden, sind ein oder mehrere Distanzierelemente 182 im Querschnitt beispielsweise T-förmig und hintergreifen die jeweilige Distanzierelementaufnahme 184 vorzugsweise in Dickenrichtung 108.

Bei der in Fig. 18 dargestellten Ausführungsform des Adapterelements 100 ist lediglich ein einziges Seitenteil 178 vorgesehen, welches mittels einer oder mehrerer Distanzierfedern 106 an dem Grundkörper 122 festgelegt ist.

Es sind jedoch auch Ausgestaltungen denkbar, bei welchen zwei oder mehr Seitenteile 178 mittels jeweils einer oder mehrerer Distanzierfedern 196 federnd an dem Grundkörper 122 angeordnet sind.

Im Übrigen stimmt die in Fig. 18 dargestellte Ausführungsform des Adapterelements 100 hinsichtlich Aufbau und Funktion mit der in den Fig. 14 bis 17 dargestellten Ausführungsform überein, so dass auf deren vorstehende Beschreibung insoweit Bezug genommen wird.

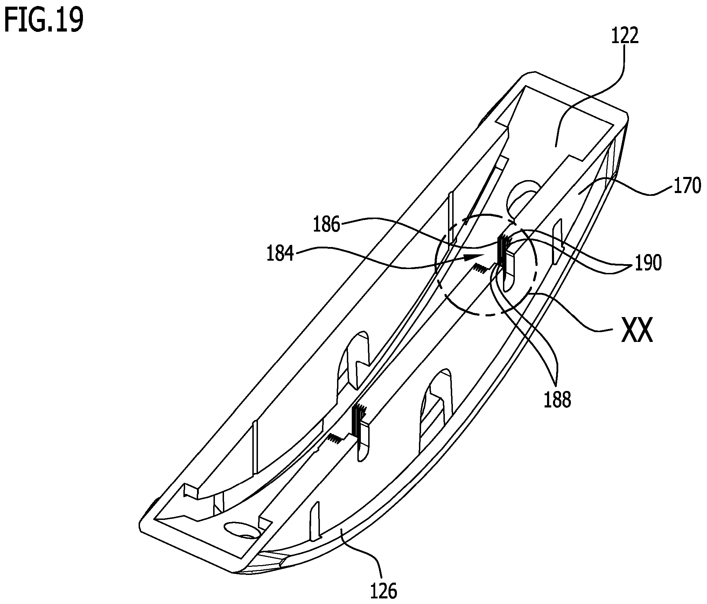

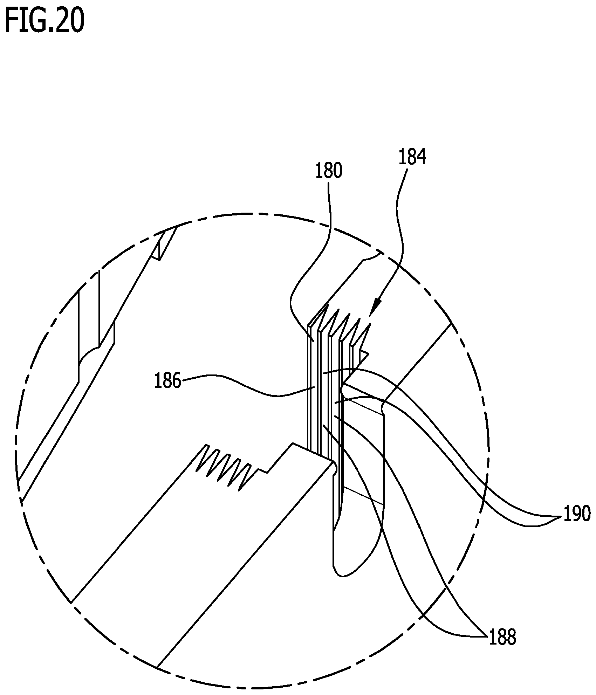

Eine in den Fig. 19 und 20 dargestellte weitere alternative Ausführungsform eines Adapterelements 100 unterscheidet sich von der in den Fig. 18 dargestellten Ausführungsform im Wesentlichen dadurch, dass das Seitenteil 178 mittels einer Rasterstruktur 186 (ähnlich der in Fig. 14 bis 17 dargestellten Ausführungsform) an dem Grundkörper 122 festlegbar ist.

Entsprechend der in Fig. 18 dargestellten Ausführungsform sind jedoch ein oder mehrere Distanzierelemente 182 T-förmig ausgebildet, wobei komplementär hierzu die Distanzierelementaufnahmen 184 einen Hinterschnitt ermöglichen (siehe insbesondere Fig. 20).

Im Übrigen stimmt die in den Fig. 19 und 20 dargestellte Ausführungsform eines Adapterelements 100 hinsichtlich Aufbau und Funktion mit der in Fig. 18 dargestellten Ausführungsform überein, so dass auf deren vorstehende Beschreibung insoweit Bezug genommen wird.

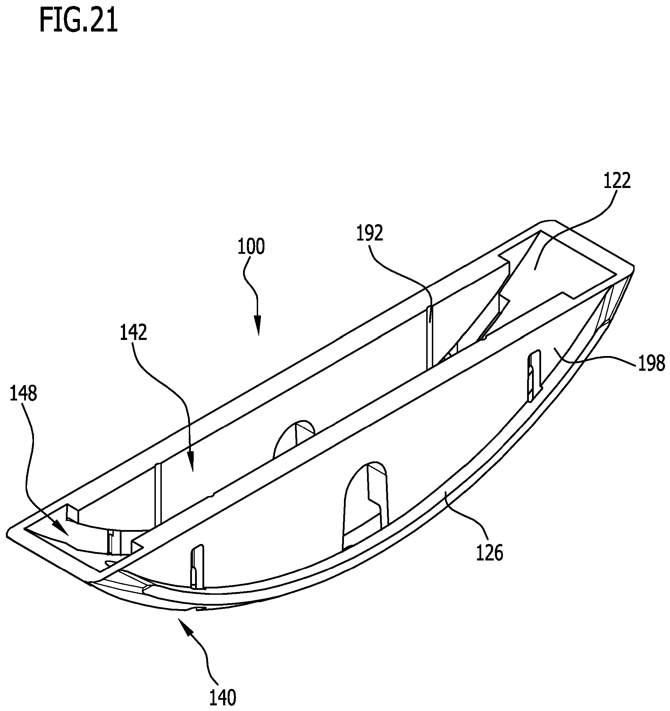

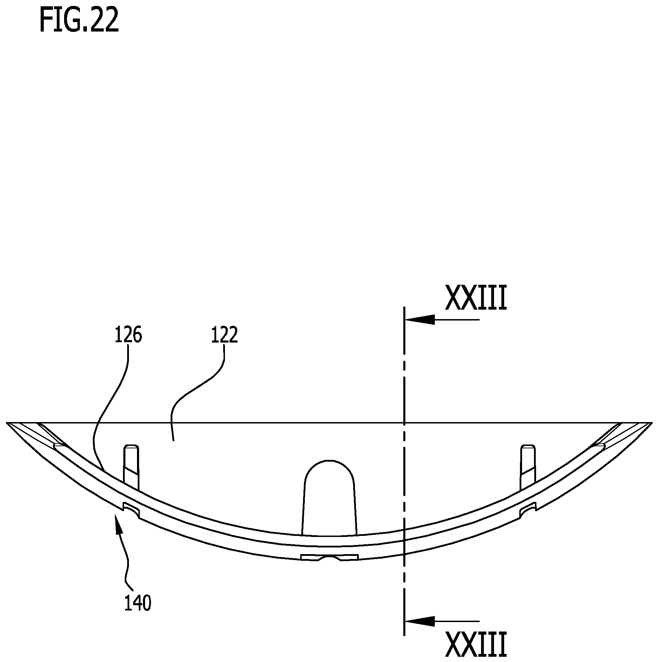

Eine in den Fig. 21 bis 23 dargestellte weitere alternative Ausführungsform eines Adapterelements 100 unterscheidet sich von der in Fig. 12 dargestellten Ausführungsform im Wesentlichen dadurch, dass eine geringere Erstreckung in der Dickenrichtung 108 vorgesehen ist.

Im Übrigen dient die in den Fig. 21 bis 23 dargestellte Ausführungsform insbesondere zur Illustration der Funktionsweise und/oder des grundsätzlichen Aufbaus des Adapterelements 100.

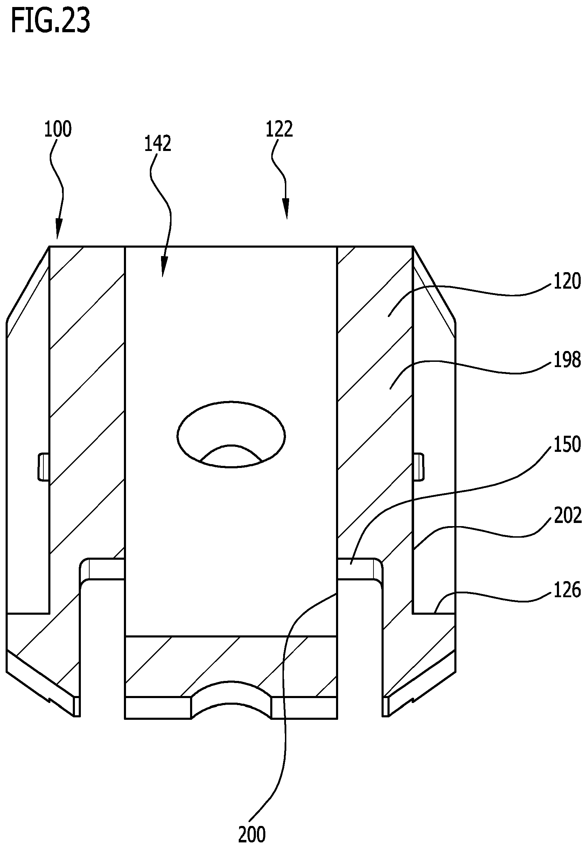

So geht insbesondere aus Fig. 23 hervor, dass die Wandung 198 an ihrer dem Aufnahmeabschnitt 142 zugewandten Innenseite 200 einen Abstützvorsprung 150 aufweist und an ihrer Außenseite 202, welche dem Aufnahmeabschnitt 142 abgewandt ist, einen Haltevorsprung 126 aufweist.

Jede der Wandungen 198 ist vorzugsweise derart aufgebaut.

Der Abstützvorsprung 150 und der Haltevorsprung 126 sind dabei abhängig von der Dicke der Wandung 198 nach Wahl voneinander beabstandet, insbesondere um insgesamt eine Variationsmöglichkeit zur Festlegung unterschiedlicher Verbindungselemente 102 in unterschiedlich dimensionierten Bauteilen 106, insbesondere Aufnahmeabschnitten 116 der Bauteile 106, zu ermöglichen.

Im Übrigen stimmt die in den Fig. 21 bis 23 dargestellte Ausführungsform des Adapterelements 100 hinsichtlich Aufbau und Funktion mit der in Fig. 12 dargestellten Ausführungsform überein, so dass auf deren vorstehende Beschreibung insoweit Bezug genommen wird.

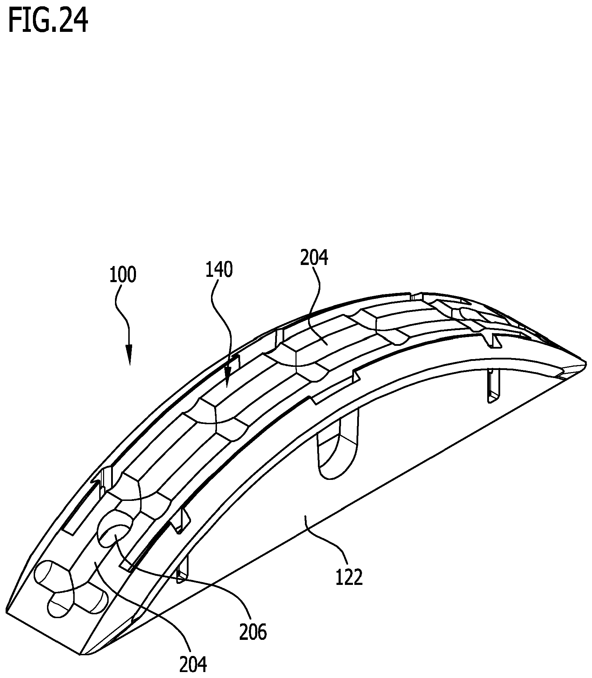

Eine in Fig. 24 dargestellte Unteransicht eines Adapterelements 100 kann in dieser Form grundsätzlich bei sämtlichen dargestellten und beschriebenen Varianten von Adapterelementen 100 vorgesehen sein.

Die Unterseite 140 des Adapterelements 100 ist dabei insbesondere mit Fließkanälen 204 versehen, welche beim Verkleben der Bauteile 106 und/oder beim Verkleben eines Adapterelements 100 mit einem Bauteil 106 zur formschlüssigen Verbindung beitragen und/oder überschüssigen Klebstoff aufnehmen können.

Günstig kann es sein, wenn das Adapterelement 100 und/oder ein darin anzuordnendes Verbindungselement 102 eine oder mehrere Einbringöffnungen 206 aufweist, welche sich insbesondere in der Tiefenrichtung 130 durch das Adapterelement 100 und/oder das Verbindungselement 102 hindurch erstrecken und somit von einer Außenseite und/oder Oberseite 136 des Adapterelements 100 eine Einbringung von Verbindungsstoff, insbesondere Klebstoff, in den Bereich an der Unterseite 140 des Adapterelements 100 ermöglichen.

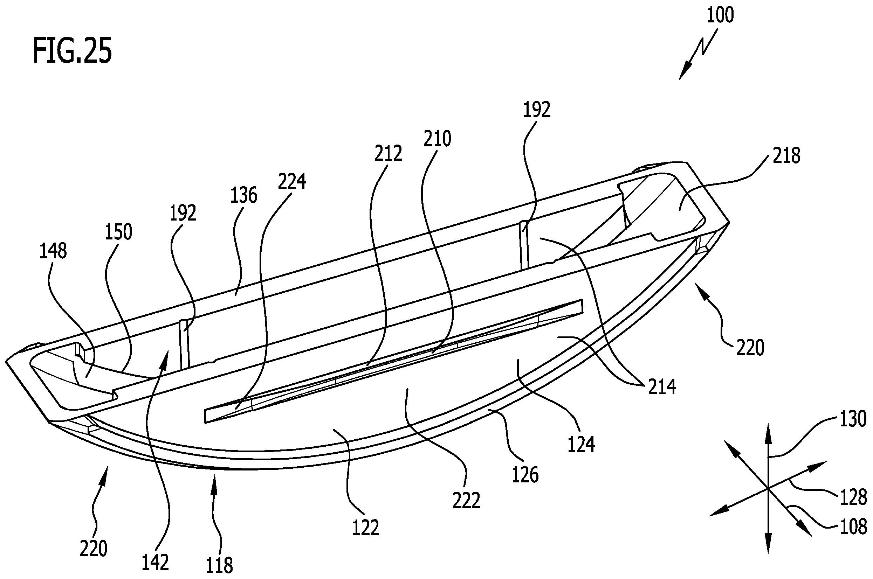

Eine in den Fig. 25 bis 27 dargestellte weitere Ausführungsform eines Adapterelements 100 unterscheidet sich von der in den Fig. 21 bis 23 dargestellten Ausführungsform eines Adapterelements 100 im Wesentlichen dadurch, dass ein oder mehrere, insbesondere zwei, Rückhalteelemente 210 vorgesehen sind.

Die Rückhalteelemente 210 sind insbesondere Rückhaltevorsprünge 212, welche sich an Seitenwänden 214 des Grundkörpers 122 des Adapterelements 100 erstrecken.

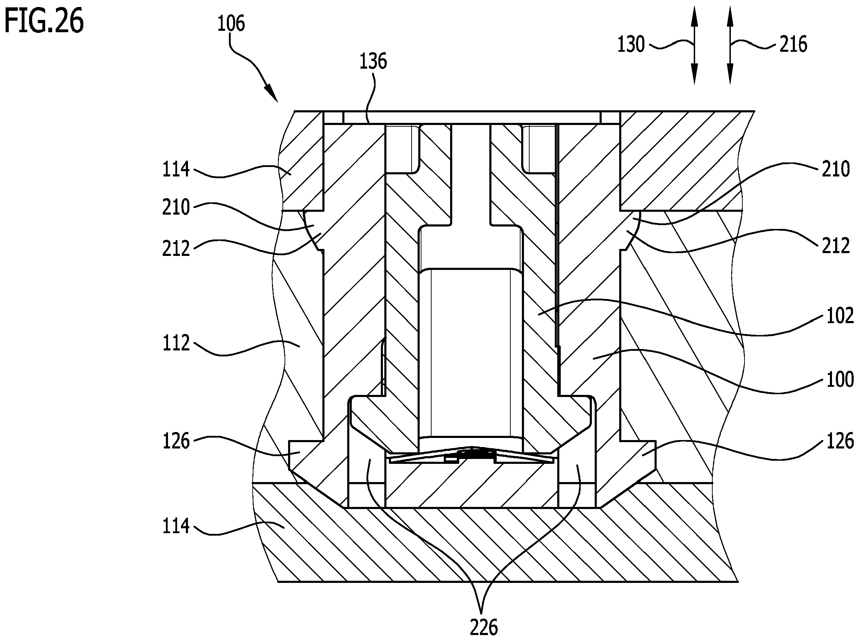

Wie insbesondere Fig. 26 zu entnehmen ist, sind die Rückhalteelemente 210 in der Tiefenrichtung 130 des Adapterelements 100 von der Oberseite 136 des Adapterelements 100 zurückversetzt angeordnet.

Wenn das Adapterelement 100 in einem beispielsweise als Leichtbauplatte ausgebildeten Bauteil 106 angeordnet wird, können die Rückhalteelemente 210 insbesondere dazu dienen, eine Deckschicht 114 des Bauteils 106 zu hintergreifen, insbesondere bezüglich der Tiefenrichtung 130 des Adapterelements 100 und/oder bezüglich einer Dickenrichtung 216 des Bauteils 106.

Das Adapterelement 100 ist somit insbesondere derart in dem Bauteil 106 festlegbar, dass die Tiefenrichtung 130 des Adapterelements 100 parallel zur Dickenrichtung 216 des Bauteils 106 angeordnet ist.

Die Rückhalteelemente 210 erstrecken sich dabei insbesondere innerhalb des Kerns 112 des Bauteils 106 unmittelbar unterhalb einer der beiden Deckschichten 114 des Bauteils 106.

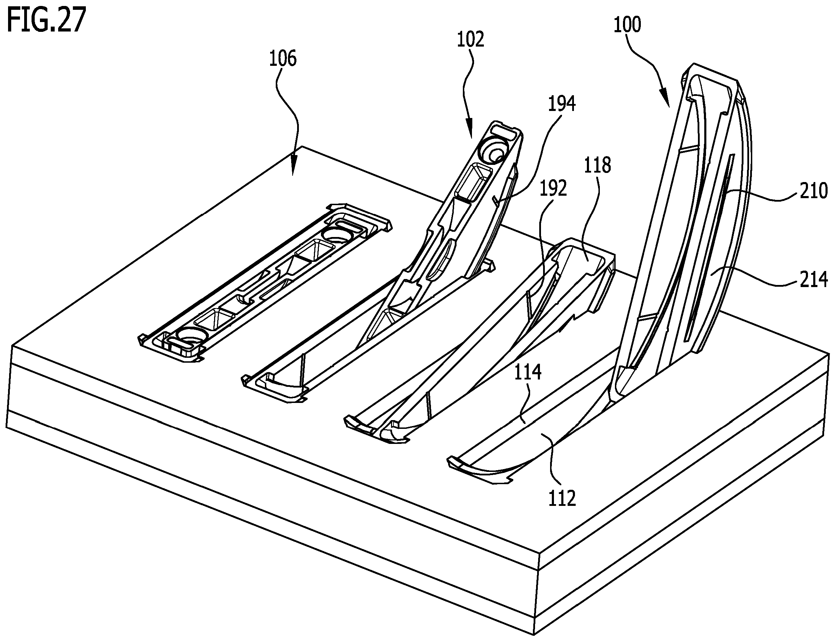

Wie insbesondere Fig. 27 zu entnehmen ist, müssen die Rückhalteelemente 210 beim Einschieben des Adapterelements 100 in das Bauteil 106 an der Deckschicht 114 des Bauteils 106 vorbeibewegt werden, um diese hintergreifen zu können.

Das Adapterelement 100 ist hierzu vorzugsweise zumindest im Bereich der Rückhalteelemente 210 zumindest abschnittsweise elastisch nachgiebig ausgebildet.

Beispielsweise kann vorgesehen sein, dass die Seitenwände 214 zumindest abschnittsweise biegsam ausgebildet sind.

Der Grundkörper 122 des Adapterelements 100 umfasst hierzu vorzugsweise eine gekrümmte Bodenwand 218, welche zwei zu beiden Seiten des Aufnahmeabschnitts 142 angeordnete Seitenwände 214 miteinander verbindet.

Jede Seitenwand 214 ist dabei vorzugsweise lediglich in einander gegenüberliegenden Endbereichen 220 der jeweiligen Seitenwand 214 mit der Bodenwand 218 fest verbunden, insbesondere einstückig verbunden.

Die Endbereiche 220 liegen dabei insbesondere bezüglich der Längsrichtung 128 des Adapterelements 100 einander gegenüber.

Ein zwischen den zwei Endbereichen 220 an jeder Seitenwand 214 angeordneter Mittelbereich 222 einer jeden Seitenwand 214 ist hierdurch vorzugsweise relativ zur Bodenwand 218 beweglich, insbesondere elastisch nachgiebig ausgebildet.

Das eine oder die mehreren Rückhalteelemente 210 erstrecken sich vorzugsweise von jeweils einer Seitenwand 214 nach außen und sind dabei vorzugsweise im Mittelbereich 222 einer jeden Seitenwand 214 angeordnet.

Durch Verformen der Seitenwand 214 derart, dass diese in den Aufnahmeabschnitt 142 hinein verformt wird, kann das jeweilige Rückhalteelement 210 beim Einschieben des Adapterelements 100 an der Deckschicht 114 des Bauteils 106 vorbeibewegt werden.

Sobald das Adapterelement 100 in der vorgegebenen Montageposition im Bauteil 106 angelangt ist, kann sich der Mittelbereich 222 der jeweiligen Seitenwand 214 vorzugsweise erneut nach außen, das heißt von dem Aufnahmeabschnitt 142 weg, bewegen, um letztlich die Deckschicht 114 zu hintergreifen (siehe Fig. 26).

Bezüglich der Tiefenrichtung 130 des Adapterelements 100 sowie bezüglich der Dickenrichtung 216 des Bauteils 106 ergibt sich hierdurch eine besonders feste Verankerung des Adapterelements 100 in dem Bauteil 106.

Wie Fig. 25 und 27 ferner zu entnehmen ist, kann es ferner vorgesehen sein, dass ein Rückhalteelement 210 oder mehrere Rückhalteelemente 210 beispielsweise als im Wesentlichen lineare kantenartige Vorsprünge ausgebildet sind. Alternativ oder ergänzend hierzu kann vorgesehen sein, dass jedes Rückhalteelement 210 jeweils ein oder mehrere Rückhaltespitzen oder Rückhaltedorne oder anderweitig geformte Rückhaltevorsprünge 212 umfasst oder aufweist.

Insbesondere mit Hinblick auf eine vereinfachte Montage des Adapterelements 100 in dem Bauteil 106 kann es vorgesehen sein, dass das Rückhalteelement 210 oder die Rückhalteelemente 210 zu den Endbereichen 220 der Seitenwände 214 hin abgeflacht ausgebildet sind.

Insbesondere weisen die Rückhalteelemente 210 vorzugsweise jeweils einen oder mehrere Flankenbereiche 224 auf, welche einen im Wesentlichen stetigen Übergang von einer Seitenfläche 124 der jeweiligen Seitenwand 214 zu dem jeweiligen Rückhaltevorsprung 212 ermöglichen und somit eine Beschädigung der Deckschicht 114 beim Einschieben des Adapterelements 100 in das Bauteil 106 verhindern oder zumindest minimieren.

Wie den Fig. 26 und 27 zu entnehmen ist, ergibt sich eine besondere Stabilität des Adapterelements 100 im Bauteil 106 insbesondere dann, wenn ein Verbindungselement 102 nach der Montage des Adapterelements 100 in dem Bauteil 106 in das Adapterelement 100 eingebracht wird.

Die beiden Seitenwände 214 werden hierbei durch das Einbringen des Verbindungselements 102 in der Dickenrichtung 108 des Adapterelements 100 auseinander bewegt, insbesondere auseinander gedrückt, so dass letztlich die Rückhalteelemente 210 in den Kern 112 und/oder unter die Deckschicht 114 des Bauteils 106 bewegt werden.

Wie Fig. 26 zu entnehmen ist, ergibt sich eine besondere Beweglichkeit der Seitenwände 214 zumindest im Mittelbereich 222 insbesondere durch einen Spalt 226 zwischen der Bodenwand 218 und den beiden Seitenwänden 214.

Durch die Form des einen oder der mehreren Rückhalteelemente 210 ergibt sich dann vorzugsweise eine feste Verankerung des Adapterelements 100 im Bauteil 106.

Mittels eines oder mehrerer Positioniervorsprünge 194 und hierzu korrespondierender Positioniernuten 192 (siehe Fig. 27) kann zudem insbesondere eine genaue und zuverlässige Festlegung des Verbindungselements 102 im Adapterelement 100 gewährleistet werden.

Im Übrigen stimmt die in den Fig. 25 bis 27 dargestellte Ausführungsform des Adapterelements hinsichtlich Aufbau und Funktion mit der in den Fig. 21 bis 23 beschriebenen Ausführungsform überein, sodass auf deren vorstehende Beschreibung insoweit Bezug genommen wird.

Insbesondere dann, wenn das Adapterelement 100 derart in einem Bauteil 106 angeordnet sein soll, dass die Tiefenrichtung 130 des Adapterelements 100 parallel zur Dickenrichtung 216 des Bauteils 106 ausgerichtet sein soll, können die beschriebenen Rückhalteelemente 210 zur Weiterbildung eines Adapterelements 100 vorteilhaft sein.

Die Rückhalteelemente 210 eignen sich daher zur Optimierung bei sämtlichen der beschriebenen Varianten von Adapterelementen 100.

### Bezugszeichenliste

- 100: Adapterelement
- 102: Verbindungselement
- 104: Verbindungsvorrichtung
- 106: Bauteil
- 108: Dickenrichtung
- 110: Sandwichelement
- 112: Kern
- 114: Deckschicht
- 116: Aufnahmeabschnitt
- 118: Festlegungsabschnitt
- 120: Außenwand
- 122: Grundkörper
- 124: Seitenfläche
- 126: Haltevorsprung
- 128: Längsrichtung
- 130: Tiefenrichtung
- 132: Aufnahmenut
- 134: Abstützvorsprung
- 136: Oberseite
- 138: Grundfläche
- 140: Unterseite
- 142: Aufnahmeabschnitt
- 144: Hohlraum
- 146: Haltevorsprung
- 148: Aufnahmenut
- 150: Abstützvorsprung
- 152: Öffnung
- 154: Einschwenkabschnitt
- 156: Stützabschnitt
- 158: Grundfläche
- 160: Arretierelement
- 162: Rastelement
- 164: Rastvorsprung
- 166: Durchtrittsöffnung
- 168: Halteelement
- 170: Teil
- 172: Nut-Feder-Verbindung
- 174: Wandung
- 176: Set
- 178: Seitenteil
- 180: Verbindungsbereich
- 182: Distanzierelement
- 184: Distanzierelementaufnahme
- 186: Rasterstruktur
- 188: Distanziervorsprung
- 190: Distanzierausnehmung
- 192: Positioniernut
- 194: Positioniervorsprung
- 196: Distanzierfeder
- 198: Wandung
- 200: Innenseite
- 202: Außenseite
- 204: Fließkanal
- 206: Einbringöffnung
- 210: Rückhalteelement
- 212: Rückhaltevorsprung
- 214: Seitenwand
- 216: Dickenrichtung
- 218: Bodenwand
- 220: Endbereich
- 222: Mittelbereich
- 224: Flankenbereich
- 226: Spalt
- D: Gesamtdicke

## Patentansprüche

1. Adapterelement (100) für ein Verbindungselement (102) einer Verbindungsvorrichtung (104), wobei das Adapterelement (100) Folgendes umfasst:
- einen Aufnahmeabschnitt (142) zur Aufnahme des Verbindungselements (102) der Verbindungsvorrichtung (104);
- einen Festlegungsabschnitt (118) zur Festlegung des Adapterelements (100) in einem Bauteil (106), wobei das Adapterelement (100) in einen Aufnahmeabschnitt (116) des Bauteils (106) einbringbar ist,
wobei der Aufnahmeabschnitt (142) des Adapterelements (100) eine oder mehrere Aufnahmenuten (148) zur Aufnahme eines oder mehrerer Haltevorsprünge (146) des Verbindungselements (102) umfasst, und
wobei der Festlegungsabschnitt (118) einen oder mehrere Haltevorsprünge (126) zum Festlegen des Adapterelements (100) in dem Bauteil (106) umfasst,
wobei die eine oder die mehreren Aufnahmenuten (148) und der eine oder die mehreren Haltevorsprünge (146) des Verbindungselements (102) gekrümmt, insbesondere kreisbogenabschnittsförmig gekrümmt, ausgebildet sind, und wobei der eine oder die mehreren Haltevorsprünge (126) des Adapterelements (100) gekrümmt, insbesondere kreisbogenabschnittsförmig gekrümmt, ausgebildet sind, und
wobei sich die eine oder die mehreren Aufnahmenuten (148) zur Aufnahme des einen oder der mehreren Haltevorsprünge (146) des Verbindungselements (102) nur einseitig oder beidseitig bis zu einer Oberseite (136) des Adapterelements (100) erstrecken,
wobei sich die eine oder die mehreren Aufnahmenuten (148) längs einer Dickenrichtung (108) des Adapterelements (100) erstrecken, wobei sich die Dickenrichtung (108) senkrecht zu Seitenflächen (124) des Adapterelements (100) und parallel zur Oberseite (136) erstreckt.

2. Adapterelement (100) nach Anspruch 1, **dadurch gekennzeichnet, dass** das Adapterelement (100) ein oder mehrere Arretierelemente (160), insbesondere Rastelemente (162), zum Festlegen eines Verbindungselements (102) in dem Aufnahmeabschnitt (142) umfasst.

3. Adapterelement (100) nach einem der Ansprüche 1 oder 2, **dadurch gekennzeichnet, dass** das Adapterelement (100) einen einstückigen Grundkörper (122) umfasst, welcher insbesondere als ein Spritzguss-Kunststoffbauteil ausgebildet ist.

4. Adapterelement (100) nach einem der Ansprüche 1 oder 2, **dadurch gekennzeichnet, dass** das Adapterelement (100) einen Grundkörper (122) umfasst, welcher mehrere miteinander verbindbare und/oder verbundene Teile (170), insbesondere mehrere lösbar miteinander verbindbare und/oder verbundene Teile (170), umfasst, wobei
a) eines oder mehrere, insbesondere sämtliche, der Teile (170) vorzugsweise als Spritzguss-Kunststoffbauteile ausgebildet sind; und/oder
b) der Grundkörper (122) aus zwei miteinander baugleichen und/oder hinsichtlich der Formgebung identischen Teilen (170) hergestellt oder herstellbar ist.

5. Adapterelement (100) nach einem der Ansprüche 1 bis 4, **dadurch gekennzeichnet, dass** das Adapterelement (100) in mindestens einer Seitenfläche (124) desselben eine oder mehrere Durchtrittsöffnungen (166) aufweist, durch welche der Aufnahmeabschnitt (142) und/oder ein in dem Aufnahmeabschnitt (142) aufgenommenes Verbindungselement (102) zugänglich ist.

6. Adapterelement (100) nach einem der Ansprüche 1 bis 5, **dadurch gekennzeichnet, dass** die eine oder die mehreren Aufnahmenuten (148) und/oder die ein oder die mehreren Haltevorsprünge (126) des Adapterelements (100) sich jeweils in und/oder längs einer Ebene erstrecken, welche parallel zu einer Längsrichtung (128) des Adapterelements (100) und/oder quer, insbesondere senkrecht, zu einer Oberseite (136) des Adapterelements (100) und/oder quer, insbesondere senkrecht, zu einer Dickenrichtung (108) des Adapterelements (100) ausgerichtet ist.

7. Adapterelement (100) nach einem der Ansprüche 1 bis 6, **dadurch gekennzeichnet, dass** das Adapterelement (100) einen Grundkörper (122) und ein oder mehrere Seitenteile (178) umfasst, welche insbesondere längs einer Dickenrichtung (108) des Grundkörpers (122) an den Grundkörper (122) angrenzend an demselben anordenbar oder angeordnet sind, wobei optional vorgesehen ist,
a) dass an einer oder beiden den Grundkörper (122) in Dickenrichtung (108) begrenzenden Außenwänden (120) jeweils ein oder mehrere Verbindungsbereiche (180) angeordnet und/oder gebildet sind, welche insbesondere mit einem oder mehreren zumindest abschnittsweise komplementär hierzu ausgebildeten Verbindungsbereichen (180) eines Seitenteils (178) in Eingriff bringbar sind; und/oder
b) dass die Seitenteile (178) in unterschiedlichen Positionen und/oder Abständen relativ zu dem Grundkörper (122) an dem Grundkörper (122) festlegbar sind.

8. Adapterelement (100) nach einem der Ansprüche 1 bis 7, **dadurch gekennzeichnet, dass** das Adapterelement (100) ein oder mehrere Rückhalteelemente (210) aufweist, welche beispielsweise als ein oder mehrere Rückhaltevorsprünge (212) ausgebildet sind, wobei optional vorgesehen ist, dass das eine oder die mehreren Rückhalteelemente (210) als linearer oder zumindest näherungsweise linearer Vorsprung ausgebildet sind, insbesondere um eine ebene Anlage desselben an und/oder unterhalb einer eben ausgebildeten Deckschicht (114) eines Bauteils (106) zu ermöglichen.

9. Verbindungsvorrichtung (104), insbesondere zur Verbindung von Möbelteilen und/oder Maschinenteilen und/oder zum Festlegen eines Bauteils (106) an einem Objekt, wobei die Verbindungsvorrichtung (104) Folgendes umfasst:
mindestens ein Verbindungselement (102) und mindestens ein Adapterelement (100) nach einem der Ansprüche 1 bis 8.

10. Verbindungsvorrichtung (104) nach Anspruch 9, **dadurch gekennzeichnet, dass** der Aufnahmeabschnitt (142) des mindestens einen Adapterelements (100) zumindest abschnittsweise komplementär zu einem Grundkörper des mindestens einen Verbindungselements (102) ausgebildet ist.

11. Verbindungsvorrichtung (104) nach einem der Ansprüche 9 oder 10, **dadurch gekennzeichnet, dass** ein Grundkörper des mindestens einen Verbindungselements (102) vollständig in dem Aufnahmeabschnitt (142) des mindestens einen Adapterelements (100) aufnehmbar oder aufgenommen ist.

12. Set (176) von Adapterelementen (100) zur Aufnahme von Verbindungselementen (102) einer oder mehrerer Verbindungsvorrichtungen (104), wobei das Set (176) mehrere Arten von Adapterelementen (100) nach einem der Ansprüche 1 bis 8 umfasst, welche sich
a) hinsichtlich ihrer Dimensionierung, insbesondere hinsichtlich ihrer Erstreckung in einer Dickenrichtung (108) und/oder einer Tiefenrichtung (130) und/oder einer Längsrichtung (128); und/oder
b) hinsichtlich der Ausgestaltung des jeweiligen Aufnahmeabschnitts (142), insbesondere hinsichtlich der Anzahl und/oder der Form und/oder der Länge und/oder des Krümmungsradius der jeweiligen mindestens einen Aufnahmenut (148); und/oder
c) hinsichtlich der Ausgestaltung des jeweiligen Festlegungsabschnitts (118), insbesondere hinsichtlich der Formgebung und/oder der Festlegungsmethode;
voneinander unterscheiden.

13. Bauteilverbund, insbesondere Möbelstück oder Maschine, wobei der Bauteilverbund mehrere Bauteile (106) umfasst, welche mittels mindestens einer Verbindungsvorrichtung (104), insbesondere mindestens einer Verbindungsvorrichtung (104) nach einem der Ansprüche 9 bis 11, miteinander verbunden sind, wobei mindestens eines der Bauteile (106) als Leichtbauteil, insbesondere als Sandwichelement (110), ausgebildet ist, wobei mindestens ein Verbindungselement (102) der mindestens einen Verbindungsvorrichtung (104) mittels mindestens eines Adapterelements (100) nach einem der Ansprüche 1 bis 8 an und/oder in dem mindestens einen Bauteil (106) festgelegt ist.

14. Verfahren zum Herstellen einer Verbindung zwischen zwei Bauteilen (106) und/oder zum Festlegen eines Bauteils (106) an einem Objekt,
wobei Folgendes vorgesehen ist:
- Auswählen eines Adapterelements (100) aus einem Set (176) von Adapterelementen (100) nach Anspruch 12, insbesondere unter Berücksichtigung einer Gesamtmaterialstärke (D) und/oder Kernmaterialstärke und/oder Deckschichtstärke eines Bauteils (106);
- Festlegen eines Verbindungselements (102) einer Verbindungsvorrichtung (104) an und/oder in dem ausgewählten Adapterelement (100);
- Einbringen des Adapterelements (100) in einen in dem Bauteil vorgefertigten Aufnahmeabschnitt (116);
- Optionales Herstellen der Verbindung zwischen den zwei Bauteilen (106) durch Verbinden des an und/oder in dem Adapterelement (100) festgelegten Verbindungselements (102) mit einem weiteren Verbindungselement (102) der Verbindungsvorrichtung (104) und/oder optionales Festlegen des Bauteils (106) an dem Objekt durch Verbinden des an und/oder in dem Adapterelement (100) festgelegten Verbindungselements (102) mit dem Objekt.

## Claims

1. Adapter element (100) for a connecting element (102) of a connecting device (104), wherein the adapter element (100) comprises the following:
- a receiving portion (142) for receiving the connecting element (102) of the connecting device (104),
- a fixing portion (118) for fixing the adapter element (100) in a component (106), wherein the adapter element (100) can be inserted into a receiving portion (116) of the component (106),
wherein the receiving portion (142) of the adapter element (100) comprises one or more receiving grooves (148) for receiving one or more holding projections (146) of the connecting element (102), and
wherein the fixing portion (118) comprises one or more holding projections (126) for fixing the adapter element (100) in the component (106), wherein the one or more receiving grooves (148) and the one or more holding projections (146) of the connecting element (102) are formed in a curved manner, in particular in a manner curved in the shape of a circular arc section, and wherein the one or more holding projections (126) of the adapter element (100) are formed in a curved manner, in particular in a manner curved in the shape of a circular arc section, and
wherein the one or more receiving grooves (148) for receiving the one or more holding projections (146) of the connecting element (102) extend only on one side or on both sides as far as a top side (136) of the adapter element (100),
wherein the one or more receiving grooves (148) extend along a thickness direction (108) of the adapter element (100), wherein the thickness direction (108) extends perpendicularly with respect to side surfaces (124) of the adapter element (100) and parallel to the top side (136).

2. Adapter element (100) according to Claim 1, **characterized in that** the adapter element (100) comprises one or more locking elements (160), in particular latching elements (162), for fixing a connecting element (102) in the receiving portion (142).

3. Adapter element (100) according to either of Claims 1 and 2, **characterized in that** the adapter element (100) comprises a one-piece main body (122) which is designed, in particular, as an injection-moulded plastic component.

4. Adapter element (100) according to either of Claims 1 and 2, **characterized in that** the adapter element (100) comprises a main body (122) which comprises a plurality of parts (170) which are connectable and/or connected to one another, in particular a plurality of parts (170) which are releasably connectable and/or connected to one another, wherein
a) one or more, in particular all, of the parts (170) are preferably formed as injection-moulded plastic components; and/or
b) the main body (122) is produced or can be produced from two parts (170) which are structurally identical to each other and/or identical in terms of shape.

5. Adapter element (100) according to one of Claims 1 to 4, **characterized in that** the adapter element (100) has, in at least one side surface (124) thereof, one or more passage openings (166), through which the receiving portion (142) and/or a connecting element (102) received in the receiving portion (142) are/is accessible.

6. Adapter element (100) according to one of Claims 1 to 5, **characterized in that** the one or more receiving grooves (148) and/or the one or more holding projections (126) of the adapter element (100) each extend in and/or along a plane which is oriented parallel to a longitudinal direction (128) of the adapter element (100) and/or transversely, in particular perpendicularly, with respect to a top side (136) of the adapter element (100) and/or transversely, in particular perpendicularly, with respect to a thickness direction (108) of the adapter element (100).

7. Adapter element (100) according to one of Claims 1 to 6, **characterized in that** the adapter element (100) comprises a main body (122) and one or more side parts (178) which can be arranged or are arranged, in particular, along a thickness direction (108) of the main body (122) in an adjacent manner with respect to the main body (122), wherein it is optionally provided
a) that one or more connecting regions (180) are arranged and/or formed in each case on one or both outer walls (120) which delimit the main body (122) in the thickness direction (108), which connecting regions can, in particular, be brought into engagement with one or more connecting regions (180), of at least partially complementary configuration, of a side part (178); and/or
b) that the side parts (178) can be fixed on the main body (122) in different positions and/or distances relative to the main body (122).

8. Adapter element (100) according to one of Claims 1 to 7, **characterized in that** the adapter element (100) has one or more retaining elements (210) which are designed, for example, as one or more retaining projections (212), wherein it is optionally provided that the one or more retaining elements (210) are formed as a linear or at least approximately linear projection, in particular to enable flat contact of the same at and/or below a flatly formed covering layer (114) of a component (106).

9. Connecting device (104), in particular for connecting furniture parts and/or machine parts and/or for fixing a component (106) to an object, wherein the connecting device (104) comprises the following: at least one connecting element (102) and at least one adapter element (100) according to one of Claims 1 to 8.

10. Connecting device (104) according to Claim 9, **characterized in that** the receiving portion (142) of the at least one adapter element (100) is of complementary formation at least in sections with respect to a main body of the at least one connecting element (102).

11. Connecting device (104) according to either of Claims 9 and 10, **characterized in that** a main body of the at least one connecting element (102) can be received or is received completely in the receiving portion (142) of the at least one adapter element (100).

12. Set (176) of adapter elements (100) for receiving connecting elements (102) of one or more connecting devices (104), wherein the set (176) comprises a plurality of types of adapter elements (100) according to one of Claims 1 to 8, which differ from one another
a) with regard to their dimensioning, in particular with regard to their extent in a thickness direction (108) and/or a depth direction (130) and/or a longitudinal direction (128); and/or
b) with regard to the design of the respective receiving portion (142), in particular with regard to the number and/or the shape and/or the length and/or the radius of curvature of the respective at least one receiving groove (148); and/or
c) with regard to the design of the relevant fixing portion (118), in particular with regard to the shape and/or the fixing method.

13. Component composite, in particular furniture item or machine, wherein the component composite comprises a plurality of components (106) which are connected to each other by means of at least one connecting device (104), in particular at least one connecting device (104) according to one of Claims 9 to 11, wherein at least one of the components (106) is formed as a lightweight component, in particular as a sandwich element (110), wherein at least one connecting element (102) of the at least one connecting device (104) is fixed by means of at least one adapter element (100) according to one of Claims 1 to 8 on and/or in the at least one component (106).

14. Method for establishing a connection between two components (106) and/or for fixing a component (106) to an object, wherein the following is provided:
- selecting an adapter element (100) from a set (176) of adapter elements (100) according to Claim 12, in particular taking into account a total material thickness (D) and/or core material thickness and/or covering layer thickness of a component (106);
- fixing a connecting element (102) of a connecting device (104) to and/or in the selected adapter element (100);
- inserting the adapter element (100) into a receiving portion (116) which is prefabricated in the component;
- optionally establishing the connection between the two components (106) by connecting the connecting element (102), which is fixed to and/or in the adapter element (100), to a further connecting element (102) of the connecting device (104) and/or optionally fixing the component (106) to the object by connecting the connecting element (102), which is fixed to and/or in the adapter element (100), to the object.

## Revendications

1. Elément adaptateur (100) pour un élément d'assemblage (102) d'un dispositif d'assemblage (104), l'élément adaptateur (100) comprenant ce qui suit:
- une section de réception (142) destinée à recevoir l'élément d'assemblage (102) du dispositif d'assemblage (104);
- une section de fixation (118) destinée à fixer l'élément adaptateur (100) dans un composant (106), l'élément adaptateur (100) pouvant être introduit dans une section de réception (116) du composant (106),
la section de réception (142) de l'élément adaptateur (100) comprenant une ou plusieurs rainures de réception (148) destinées à recevoir une ou plusieurs parties faisant saillie de maintien (146) de l'élément d'assemblage (102), et
la section de fixation (118) comprenant une ou plusieurs parties faisant saillie de maintien (126) destinées à fixer l'élément adaptateur (100) dans le composant (106), les une ou plusieurs rainures de réception (148) et les une ou plusieurs parties faisant saillie de maintien (146) de l'élément d'assemblage (102) étant réalisées de manière incurvée, en particulier avec une forme de section en arc de cercle, les une ou plusieurs parties faisant saillie de maintien (126) de l'élément adaptateur (100) étant réalisées de manière incurvée, en particulier de manière incurvée avec une forme de section en arc de cercle, et
les une ou plusieurs rainures de réception (148) destinées à recevoir les une ou plusieurs parties faisant saillie de maintien (146) de l'élément d'assemblage (102) s'étendant seulement sur un côté ou des deux côtés jusqu'à un côté supérieur (136) de l'élément adaptateur (100),
les une ou plusieurs rainures de réception (148) s'étendant le long d'un sens de l'épaisseur (108) de l'élément adaptateur (100), le sens de l'épaisseur (108) s'étendant perpendiculairement aux faces latérales (124) de l'élément adaptateur (100) et parallèlement au côté supérieur (136).

2. Elément adaptateur (100) selon la revendication 1, **caractérisé en ce que** l'élément adaptateur (100) comprend un ou plusieurs éléments d'arrêt (160), en particulier des éléments d'enclenchement (162), destinés à fixer un élément d'assemblage (102) dans la section de réception (142).

3. Elément adaptateur (100) selon l'une des revendications 1 ou 2, **caractérisé en ce que** l'élément adaptateur (100) comprend un corps de base (122) d'un seul tenant, lequel est réalisé en particulier comme un composant en matière plastique moulé par injection.

4. Elément adaptateur (100) selon l'une des revendications 1 ou 2, **caractérisé en ce que** l'élément adaptateur (100) comprend un corps de base (122), lequel comprend plusieurs parties (170) pouvant être assemblées et/ou assemblées les unes aux autres, en particulier plusieurs parties (170) pouvant être assemblées et/ou assemblées de manière amovible les unes aux autres,
a) une ou plusieurs, en particulier la totalité, des parties (170) étant réalisées de préférence comme des composants en matière plastique moulés par injection; et/ou
b) le corps de base (122) étant fabriqué ou pouvant être fabriqué à partir de deux parties (170) à structure identique et/ou identiques en matière de mise en forme.

5. Elément adaptateur (100) selon l'une des revendications 1 à 4, **caractérisé en ce que** l'élément adaptateur (100) comporte, dans au moins une face latérale (124) de celui-ci, une ou plusieurs ouvertures de passage (166), par lesquelles la section de réception (142) et/ou un élément d'assemblage (102) reçu dans la section de réception (142) sont accessibles.

6. Elément adaptateur (100) selon l'une des revendications 1 à 5, **caractérisé en ce que** les une ou plusieurs rainures de réception (148) et/ou les une ou les plusieurs parties faisant saillie de maintien (126) de l'élément adaptateur (100) s'étendent chacune dans et/ou le long d'un plan, qui est orienté parallèlement à un sens longitudinal (128) de l'élément adaptateur (100) et/ou transversalement, en particulier perpendiculairement, à un côté supérieur (136) de l'élément adaptateur (100) et/ou transversalement, en particulier perpendiculairement, à un sens de l'épaisseur (108) de l'élément adaptateur (100).

7. Elément adaptateur (100) selon l'une des revendications 1 à 6, **caractérisé en ce que** l'élément adaptateur (100) comprend un corps de base (122) et une ou plusieurs parties latérales (178), qui peuvent être disposées ou sont disposées sur le corps de base (122) tout en le jouxtant en particulier le long d'un sens de l'épaisseur (108) du corps de base (122),
a) le fait que respectivement une ou plusieurs zones d'assemblage (180) sont disposées et/ou formées sur une ou deux parois extérieures (120) délimitant dans le sens de l'épaisseur (108) le corps de base (122), lesquelles peuvent être amenées en prise en particulier avec une ou plusieurs zones d'assemblage (180) d'une partie latérale (178) réalisées au moins par endroits de manière complémentaire; et/ou
b) le fait que les parties latérales (178) peuvent être fixées sur le corps de base (122) dans des positions et/ou à des distances différentes par rapport au corps de base (122) étant prévus en option.

8. Elément adaptateur (100) selon l'une des revendications 1 à 7, **caractérisé en ce que** l'élément adaptateur (100) comporte un ou plusieurs éléments de retenue (210), qui sont réalisés par exemple comme une ou plusieurs parties faisant saillie de retenue (212), le fait que les un ou plusieurs éléments de retenue (210) soient réalisés comme une partie faisant saillie linéaire ou au moins approximativement linéaire pour permettre en particulier un appui plan de celle-ci sur et/ou sous une couche de recouvrement (114) réalisée de manière plane d'un composant (106) étant prévu en option.

9. Dispositif d'assemblage (104), destiné en particulier à assembler des parties de meuble et/ou des parties de machine et/ou destiné à fixer un composant (106) sur un objet, le dispositif d'assemblage (104) comprenant ce qui suit: au moins un élément d'assemblage (102) et au moins un élément adaptateur (100) selon l'une des revendications 1 à 8.

10. Dispositif d'assemblage (104) selon la revendication 9, **caractérisé en ce que** la section de réception (142) de l'au moins un élément adaptateur (100) est réalisée au moins par endroits de manière complémentaire à un corps de base de l'au moins un élément d'assemblage (102).

11. Dispositif d'assemblage (104) selon l'une des revendications 9 ou 10, **caractérisé en ce qu'**un corps de base de l'au moins un élément d'assemblage (102) peut être reçu ou est reçu en totalité dans la section de réception (142) de l'au moins un élément adaptateur (100).

12. Ensemble (176) d'éléments adaptateurs (100) destiné à recevoir des éléments d'assemblage (102) d'un ou de plusieurs dispositifs d'assemblage (104), l'ensemble (176) comprenant plusieurs types d'éléments adaptateurs (100) selon l'une des revendications 1 à 8, lesquels se distinguent les uns des autres
a) quant à leur dimensionnement, en particulier quant à leur extension dans un sens de l'épaisseur (108) et/ou un sens de la profondeur (130) et/ou un sens longitudinal (128); et/ou
b) quant à la configuration de la section de réception (142) respective, en particulier quant au nombre et/ou à la forme et/ou à la longueur et/ou au rayon d'incurvation de l'au moins une rainure de réception (148) respective; et/ou
c) quant à la configuration de la section de fixation (118) respective, en particulier quant à la mise en forme et/ou au procédé de fixation.

13. Elément composite, en particulier pièce de meuble ou machine, l'élément composite comprenant plusieurs composants (106), qui sont assemblés les uns aux autres au moyen d'au moins un dispositif d'assemblage (104), en particulier d'au moins un dispositif d'assemblage (104) selon l'une des revendications 9 à 11, au moins un des composants (106) étant réalisé comme un composant léger, en particulier comme un élément sandwich (110), au moins un élément d'assemblage (102) de l'au moins un dispositif d'assemblage (104) étant fixé au moyen d'au moins un élément adaptateur (100) selon l'une des revendications 1 à 8 et/ou dans l'au moins un composant (106).

14. Procédé destiné à établir un assemblage entre deux composants (106) et/ou destiné à fixer un composant (106) sur un objet, ce qui suit étant prévu:
- sélection d'un élément adaptateur (100) parmi un ensemble (176) d'éléments adaptateurs (100) selon la revendication 12, en particulier en tenant compte d'une épaisseur de matériau totale (D) et/ou d'une épaisseur de matériau centrale et/ou d'une épaisseur de couche de recouvrement d'un composant (106);
- fixation d'un élément d'assemblage (102) d'un dispositif d'assemblage (104) sur et/ou dans l'élément adaptateur (100) sélectionné;
- introduction de l'élément adaptateur (100) dans une section de réception (116) préfabriquée dans le composant;
- établissement en option de l'assemblage entre les deux composants (106) en assemblant l'élément d'assemblage (102) fixé sur et/ou dans l'élément adaptateur (100) à un autre élément d'assemblage (102) du dispositif d'assemblage (104) et/ou fixation en option du composant (106) sur l'objet en assemblant l'élément d'assemblage (102) fixé sur et/ou dans l'élément adaptateur (100) à l'objet.
